(19) Europäisches Patentamt
European Patent Office
Office européen des brevets

(11) **EP 2 154 495 B1**

(12) **EUROPÄISCHE PATENTSCHRIFT**

(45) Veröffentlichungstag und Bekanntmachung des Hinweises auf die Patenterteilung:
**22.05.2013 Patentblatt 2013/21**

(51) Int Cl.:
*G01F 23/284* (2006.01)

(21) Anmeldenummer: **08105050.2**

(22) Anmeldetag: **15.08.2008**

(54) **TDR-Sensor und -Messverfahren**

TDR sensor and measuring method

Capteur TDR et procédé de mesure

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**17.02.2010 Patentblatt 2010/07**

(73) Patentinhaber: **SICK AG**
**79183 Waldkirch (DE)**

(72) Erfinder: **Jahn, Axel**
**79183, Waldkirch (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
EP-A- 1 069 649    EP-A- 1 186 869
WO-A-01/63219    WO-A-02/23139
DE-B3-102004 035 757    US-A- 4 135 397
US-A- 5 656 774    US-A1- 2004 059 508

**Beschreibung**

Die Erfindung betrifft einen Sensor sowie ein Messverfahren nach dem TDR-Prinzip gemäß den Oberbegriffen von Anspruch 1 beziehungsweise 9.

Das TDR-Messprinzip (time domain reflectometry) basiert auf der Bestimmung von Laufzeiten eines elektromagnetischen Pulses, um den Abstand einer Diskontinuität des Leitungswellenwiderstandes wie etwa eines Kabelbruchs oder einer Produktgrenzfläche zu ermitteln. Es ähnelt somit dem Radar, wobei der Unterschied darin besteht, dass die elektromagnetischen Wellen nicht ins Freie abgestrahlt, sondern entlang eines Leiters geführt werden. Eine der ältesten Anwendungen des TDR-Prinzips ist die Lokalisierung von Brüchen in Überseeleitungen.

Das Messprinzip an sich ist einfach. Ein sehr kurzer elektrischer Sendeimpuls wird in die Leitung eingespeist und durchläuft diese zu ihrem Ende hin. Trifft der Impuls auf eine Störstelle, was gleichbedeutend mit einer Änderungen des örtlichen Wellenwiderstand ist, wird ein Teil der Sendeenergie zum Leitungseingang zurückreflektiert. Aus der Laufzeit zwischen dem Aussenden des Sendeimpulses und dem Empfang der Reflexion lässt sich die Position der Störstelle ortsgenau errechnen.

Sensoren, die auf dem TDR-Prinzip beruhen, werden unter anderem für die Bestimmung von Füllständen eingesetzt. Die Leitung entspricht hier einer Messsonde, welche typischerweise annähernd lotrecht von oben in dem zu überwachenden Tank eingebaut ist und bis nahe an den Tankboden heranreicht.

Bei derartigen Füllstandssensoren wird zwischen offenen Sonden und geschlossenen Sonden unterschieden. Die erstgenannten bestehen aus einem einfachen Leiter und nutzen die Umgebung als Gegenpol der Sondenkopplung. Speziell bildet also die Metallwand des Tanks den Rückleiter. Das Einsatzgebiet solcher Sensoren ist daher auf Behälter aus leitendem Material beschränkt. Die offene Sonde wirkt als Sendeantenne, deren Sendeimpuls abgestrahlt wird und die im Behälter vorhandenen Medien durchläuft. Da sich die Einbauorte und die Geometrien von Tank zu Tank unterscheiden können, sind die Reflexionswege nicht allgemein und eindeutig vorhersagbar. Zudem erfährt das Sendesignal eine starke Dämpfung durch die Medien. Vor allem im oberen Bereich des Behälters hängt die Wellenausbreitung in erheblichem Maße von der Geometrie des Behälters ab und beeinträchtigt so die Messgenauigkeit des Sensors. Gleichzeitig erfährt das Sendesignal eine stärkere Dämpfung durch das Medium und auch hierdurch liefert der Sensor ungenauere Messergebnisse. All dies erhöht den Aufwand in der Auswertung beträchtlich und erfordert meist eine individuelle Kalibrierung des Gesamtsystems.

Geschlossene Sonden dagegen bestehen meist aus einer koaxialen Leitung, die selbst ihren Innenleiter und Außenleiter mitbringt. In diesem Fall wird die Mikrowelle von der koaxialen Leitung geführt, womit der Sensor unabhängig von dem Behälter wird, in dem er eingesetzt ist. Hier werden die Übereinstimmungen mit der ursprünglichen Kabelmesstechnik besonders deutlich. Der untere Teil des Innen- und des Außenleiters steht im Kontakt zur Flüssigkeit. Bohrungen, Schlitze oder ähnliche Öffnungen im Außenleiter stellen dabei sicher, dass der Füllstand am Innenleiter mit dem im Tank übereinstimmt. Im oberen Bereich, zwischen dem Einspeisepunkt für den Sendeimpuls und der Mediumoberfläche, befindet sich Luft zwischen dem Innen- und Außenleiter.

Als eine Art Zwischenlösung zwischen geschlossenen und offenen Systemen ist aus der EP 0 799 407 B1 bekannt, zwar nur einen Einzelleiter in den Tank einzuführen, aber als Bezugsfläche für die Welle eine sogenannte Launcherplate am Sensorkopf vorzusehen. Diese Launcherplate bildet so etwas wie das Rudiment eines Außenleiters, zumindest im oberen Bereich der Sonde. Damit lässt sich auch ohne metallischen Behälter eine Einzelleitersonde verwenden. Die Sonde wirkt wie im Fall der offenen Anordnungen als Sendeantenne. Nachteile durch Tankgeometrien, unterschiedliche Einbauorte und Dämpfung der offenen Sonde vermeidet die Launcherplate allenfalls partiell.

Bei Verwendung offener, unsymmetrischer Sondensysteme wie einer Einzelstabsonde mit Launcherplate in nicht-metallischen Tanks können sich auch Probleme mit der elektromagnetischen Verträglichkeit (EMV) bezüglich Abstrahlung und Einstrahlung ergeben. So kann ein Teil der ausgesendeten Energie das Tankvolumen verlassen und sich in der Umgebung ausbreiten. Im schlimmsten Fall führt das zu Störungen bei benachbarten Geräten. Aus den gleichen Gründen sind solche Sondenanordnungen auch empfindlich gegenüber Feldeinstrahlungen, die von außen auf den Sensor wirken. In einer rauen Industrieumgebung kann dies zu nennenswerten Problemen in der Applikation führen.

Geschlossene Leiteranordnungen wie beispielsweise Koaxialsonden ermöglichen sehr reproduzierbare Messungen in beliebigen Tankformen. Sie sind aber schwer zu reinigen und potentiell anfälliger gegenüber Ablagerungen. Ganz besonders bei Füllstandsmessungen im Lebensmittelbereich ist dies ein gravierender Nachteil, da sich die einschlägigen Hygienevorschriften nicht oder nur sehr schwer einhalten lassen.

Einzelleitersonden dagegen können zwar sehr viel kostengünstiger hergestellt und auch erheblich einfacher gereinigt werden, bringen aber die oben beschriebenen Nachteile bei der Messgenauigkeit durch Dämpfung und Abhängigkeiten von Behältermaterial und -geometrie mit sich.

Wesentliches Merkmal eines jeden Mediums für die TDR-Messung ist die relative Dielektrizitätskonstante $\varepsilon_r$ gegenüber Luft. Diese ist der Grund dafür, weshalb sich der Wellenwiderstand einer gegebenen Koaxialsonde bei gleichbleibender Geometrie im Kontaktbereich mit dem Medium verringert. Für eine Koaxialleitung gilt in guter Näherung:

$$Z_W = \frac{60\Omega}{\sqrt{\varepsilon_r}} * Ln\left(\frac{d_a}{d_i}\right)$$

mit:

$Z_w$:  Wellenwiderstand der Koaxialleitung,
$\varepsilon_r$:  Dielektrizitätskonstante des Mediums gegenüber Luft,
$d_a$:  Durchmesser des Außenleiters und
$d_i$:  Durchmesser des Innenleiters.

Die Grenzfläche zwischen Luft und Medium oder spezieller Flüssigkeit, entspricht der Füllstandshöhe. Sie stellt für den elektrischen Impuls eine Störstelle dar, an welcher ein Teil der Sendeenergie reflektiert wird und zu einem messbaren Empfangssignal führt. Die Amplitude der reflektierten Welle ist also abhängig vom $\varepsilon_r$-Unterschied zwischen Luft und den zu vermessenden Medien. Sobald an der Grenzfläche nur geringe Unterschiede der Dielektrizitätskonstanten $\varepsilon_r$ vorhanden sind, führt dies zu kleinen Amplituden des reflektierten Signals. Das beeinträchtigt in der Auswertung die erreichbare Messgenauigkeit beim Ermitteln der Grenzflächenposition.

Das ferne Sondenende hat im normalen Betrieb typischerweise Kontakt mit der zu vermessenden Flüssigkeit. Es ist immer mit einer komplexen Impedanz abgeschlossen. Häufig ist dies ein Leerlauf, also ein offenes Leitungsende, ein Kurzschluss oder eine an den Wellenwiderstand der Leitung angepasste reelle oder komplexe Impedanz. Bei jeder dieser konkreten Realisierungen des Abschlusses wird bei einem Unterschied zwischen Wellenwiderstand und Abschlusswiderstand am Sondenende ein zusätzlicher Reflexpuls erzeugt, der keinen nutzbaren Messwert einer Grenzfläche, sondern lediglich als Messartefakt das Ende der Sonde repräsentiert. Mit diesem in der Realität starken Störsignal überlagert sich unabhängig vom Sondentyp ein Messsignal in der Nähe des Sondenendes teilweise oder vollständig, so dass also eine Totzone besteht, in der keine zuverlässigen Messergebnisse ermittelt werden können. Niedrige Füllstände oder allgemein Füllstände im Bereich des Sondenendes in einem Behälter lassen sich damit nicht genau oder gar nicht mehr messen, was umso störender wird, je kleiner der Behälter ist. Die Messung ist am schwierigsten für niedrige Dielektrizitätskonstanten $\varepsilon_r$, da dann wegen der annähernd gleichen Laufzeiten in Luft und im Medium der Messpuls und der Artefaktpuls besonders dicht aufeinander folgen. Bei höheren Dielektrizitätskonstanten $\varepsilon_r$ wird der Abstand zwischen diesen beiden Pulsen durch die höheren Laufzeiten im Medium etwas entzerrt.

Bei offenen Einzelstabsonden bildet idealerweise ein elektrischer Leerlauf den Abschluss. In der Realität bildet sich jedoch zwischen dem Sondenende und dem Metalltank eine Kapazität aus. Der genaue Wert dieser komplexen Abschlussimpedanz ist abhängig von der konkreten Einbausituation und damit nicht eindeutig vorhersagbar. Daher ist im Voraus eine allgemeingültige Kompensation unmöglich.

Mehrere herkömmliche Ansätze sind bestrebt, die Totzone am Sondenende zu minimieren. In der DE 100 43 838 A1 ist dazu ein Abschlusswiderstand vorgesehen, welcher auf den Wellenwiderstand abgestimmt sein soll, um die Energie zu absorbieren. Die optimale Abstimmung ist aber in der Praxis gar nicht möglich, weil die dafür erforderliche Impedanz im Voraus nicht bekannt ist. Der Wellenwiderstand der Leitung hängt von der relativen Dielektrizitätskonstanten $\varepsilon_r$ des Mediums ab, die in weiten Bereichen variieren kann, nämlich typischerweise von ca. $\varepsilon_r$ = 1,8 bei Ölen bis ca. $\varepsilon_r$ = 80 bei Wasser. Der Wert des Abschlusswiderstands wird aber bereits bei der Produktion des Sensors festgelegt. Zudem kann sogar noch eine Abhängigkeit von der aktuellen Eintauchtiefe bzw. Füllhöhe bestehen, die nicht konstant und somit für eine Festlegung bei Produktion nicht bekannt ist. Somit lässt sich der Einfluss des Abschlusswiderstands in den meisten Anwendungsfällen nur verringern, jedoch nicht grundsätzlich unterdrücken.

Der Widerstand und seine Verbindungen mit der Sonde müssen außerdem den Beanspruchungen etwa durch eine umspülende Flüssigkeit standhalten, da sie in direktem Kontakt mit dem Medium stehen. Bei hochkorrosiven, heißen oder chemisch aggressiven Flüssigkeiten kann dies eine weitere Herausforderung darstellen und im Bereich Lebensmittel können umgekehrt hygienisch nicht zulässige Ablagerungen und Verunreinigungen des Mediums durch den Abschluss der Sonde entstehen, vor allem wenn sie von dem Medium angegriffen wird.

Im Übrigen führt der Abschluss durch seine endliche Ausdehnung und seine Anordnung zwischen Sonde und Behälterboden selbst eine Totzone ein. Zugleich ist der Abschluss für das Medium nicht durchlässig, so dass aufgrund von Kapillarkräften Flüssigkeit in der Sonde aufsteigen oder verbleiben kann und damit der Messung einen nicht der Realität entsprechenden Füllstand suggeriert.

Schließlich werden die Anforderungen der Anpassung mit steigender Bandbreite beziehungsweise Arbeitsfrequenz zunehmend schwieriger. Diese Arbeitsfrequenz möchte man aber für eine hohe Messgenauigkeit nicht zuletzt gerade im Bereich der Totzone für möglichst steile Pulse sehr hoch halten.

In einem anderen Ansatz gemäß der DE 101 01 714 A1 wird eine Koaxialsonde am Behälterboden um 90° gebogen und dort noch ein Stück horizontal geführt, ehe sie offen endet. Die Idee dabei ist, dass zwar ein Artefaktpuls am Sondenende entsteht, dieser aber zeitlich gegenüber einem Messpuls bei niedrigst möglichem Flüssigkeitsstand durch die horizontale Strecke verzögert wird. Nachteilig hieran ist neben der umständlicheren und störanfälligeren Herstellung und Montage, dass der Artefaktpuls dennoch nicht unterdrückt wird und dass in dem 90°-Winkel erneut ein wenn auch abgeschwächter weiterer Artefaktpuls entsteht.

Besonders hohe Anforderungen stellt die Messung von geschichteten Flüssigkeiten mit mehreren Grenzflächen wie beispielsweise Öl auf Wasser. Sind die Schichten außerdem noch dünn, so überlagern sich die von den Grenzflächen verursachten Reflektionen. Dann lassen sich die Positionen der beteiligten Grenzflächen nicht mehr trennen.

Eine gewisse Abhilfe ist durch erhöhte Messbandbreiten denkbar, bei dem die Pulse steiler und damit besser auflösbar werden.

Aus der DE 199 58 584 C1 ist bekannt, eine Koaxialsonde zu verwenden und ihr einen zweiten Leiter nebenzuordnen, welcher an einem dem Messkopf gegenüberliegenden Ende der Koaxialsonde mit deren Innenleiter verbunden ist. Die Grenzfläche zwischen den beiden Medien wird dann quasi von unten durch eine auf dem zweiten Leiter zurücklaufende Welle detektiert, an der ein Reflex entsteht, welcher sich leichter von dem Übergang Luft auf oberes Medium in dem Koaxialleiter separieren lässt. Diese Druckschrift befasst sich allein mit dem Sonderfall geschichteter Medien und schweigt vollständig zu der Frage der Vermeidung einer Totzone. Auf dem deutlich beabstandeten zweiten Leiter läuft die Welle nach Art einer Einzelsonde bis zu der Grenzfläche zwischen den beiden Medien zurück, mit den oben zu Einzelsonden beschriebenen Nachteilen. Die fehlende Symmetrie zwischen der Koaxialleitung für den Hinweg und der Einzelleitung für den Rückweg macht die Messung ungenau und schwer für beliebige Behälter und Anwendungen verallgemeinerbar. Nicht zuletzt ist die Reinigung der dargestellten Konstruktion mit ihren zahlreichen Kanten ausgesprochen aufwändig.

Aus der US 2007/0090992 A1 ist bekannt, zwei TDR-Sonden nebeneinander anzuordnen, um parallel mehrere Grenzflächen oder Füllstände auszumessen. Diese beiden Sonden sind aber nicht untereinander verbunden, so dass kein rücklaufender Puls vorhanden ist.

In der DE 100 44 888 A1 wird der Artefaktpuls ausgenutzt, um anhand der Laufzeitverzögerung innerhalb des Mediums gegenüber der Laufgeschwindigkeit in Luft die relative Dielektrizitätskonstante $\varepsilon_r$ des Mediums im Behälter während des Betriebs zu ermitteln. Sämtliche herkömmlichen aufwändigen Maßnahmen zu Vermeidung des Artefaktpulses entziehen diesem Verfahren seine Grundlage, nämlich den Artefaktpuls, so dass dieses Verfahren bei einem TDR-Sensor ohne Totzone gerade nicht funktionieren kann.

Aus der US 4,135,397 ist ein Füllstandsmesssystem bekannt, bei dem Pulse in eine Koaxialleitung eingespeist und die Zeit bis zum Empfang reflektierter Pulse bestimmt wird. Die Koaxialleitung ist an ihrem unteren Ende mit einer Impedanz abgeschlossen.

Die US 2004/0059508 A1 offenbart eine Distanzmessung unter Verwendung multistatischer Sonden. Dabei sind ein Sende- und ein Empfangsleiter vorgesehen, die untereinander nicht verbunden sind. In einer Ausführungsform können diese Leiter zur Abschirmung von einem dritten leitenden Element zumindest teilweise umgeben sein.

Die WO 01/63219 A2 beschreibt einen TDR-Füllstandssensor mit einer L-förmigen koaxialen Sonde, um den Messbereich bis auf den Boden eines Behälters ausdehnen zu können. In anderen Ausführungsformen kann die Sonde auch die Form eines U, eines W und weitere Formen annehmen.

Die WO 02/23139 A1 zeigt ein Füllstandsmessgerät, bei dem die Sonde als Seilsonde ausgebildet sein kann.

Aus der EP 1 069 649 A1 ist ein besonders für die Anwendung in der Lebensmittelindustrie geeigneter Wellenleiter für ein Mikrowellen-Füllstandsmessgerät bekannt.

In der US 5,656,774 ist ein TDR-Füllstandssensor beschrieben, bei dem die offene Sonde mit einer Bezugsplatte eine Gaobau-Leitung bildet. Zwischen dem Innenleiter einer Koaxialleitung, die Signale zu der Sonde hinführt, und der Bezugsplatte kann eine Impedanz vorgesehen sein.

Die EP 1 186 869 A2 zeigt eine Füllstandsmessvorrichtung mit einem ohmschen Widerstand als Abschluss. Die Konstruktion mit dem Widerstand am Sondenende ist in einer Ausführungsform einige Millimeter hoch mit isolierender Vergussmasse gefüllt.

In der DE 10 2004 035 757 B3 wird eine Anordnung zur Bestimmung der Höhe eines Flüssigkeitsstandes offenbart. Ein Gewicht am Ende der als Seil ausgebildeten Sonde umschließt zwei Abschlusswiderstände.

Es ist daher Aufgabe der Erfindung, einen Sensor und ein Verfahren nach dem TDR-Prinzip mit möglichst großer Unabhängigkeit von der Messsituation und hoher Messgenauigkeit über den gesamten Messbereich anzugeben.

Diese Aufgabe wird durch einen Sensor gemäß Anspruch 1 sowie ein Verfahren gemäß Anspruch 9 gelöst.

Die erfindungsgemäße Lösung geht von dem Grundgedanken aus, die Energie des Artefaktsignals für die Messung auszunutzen oder zumindest so abzuleiten, dass nicht gerade außen am zweiten Sondenende ein Abschluss notwendig ist. Indem das Signal auf einem Rückleiter weitergeführt wird, ist die Totzone effektiv vermieden und die Voraussetzung für eine genauere Messung über die gesamte Sondenlänge geschaffen. Die Welle soll dabei auf dem Rückleiter ebenso effektiv geführt werden wie auf dem Innenleiter.

Die Erfindung hat den Vorteil, dass die Messgenauigkeit erhöht ist. Es gibt keine Totzone am zweiten Sondenende, der Messbereich ist erweitert und auch für niedrige Füllstände eine hochgenaue Messung ermöglicht. Der Sensor kann ohne Kanten und Vorsprünge gebaut werden. Insbesondere wird ein Abschluss entweder überflüssig oder kann an einem Ort eingebaut werden, an dem er nicht mit dem Medium in Kontakt kommt oder leichter zugänglich ist. EMV-Probleme aufgrund frei in den Behälter gestrahlter Signale werden verhindert. Dank des Bezugsleiters werden für die auf dem Rückleiter laufende Welle insgesamt ähnliche Vorteile verwirklicht, wie in herkömmlichen Systemen, also ohne Rückleitung, eine geschlossene Sonde gegenüber einer offenen Sonde zeigt.

Das Signal ist häufig ein Puls, sogar in der Praxis ein zeitlich sehr scharfer Puls. Er kann parabelförmig, gaussisch oder anders geformt sein. Die Erfindung umfasst aber auch andere denkbare Signalformen, etwa eine Sprungfunktion mit Auswertung der Sprungantwort, Pulsfolgen oder andere funktionale Verläufe. Ebenso ist zwar bevorzugt, die Signalform oder spezieller die Pulsform mittels einer Unterabtastung aufzuzeichnen und dann auf die zeitliche Lage von Extrema auszuwerten, beispielsweise durch Schwellenoperationen oder sonstige prinzipiell bekannte Verfahren der Funktionsdiskussion. Es wird aber im Rahmen dieser Beschreibung als gleichwertig angesehen, andere mathematische Verfahren einzusetzen, um die Laufzeit zu bestimmen, etwa Korrelationen oder Faltungen mit einer Referenz und weitere.

Das Signal ist bevorzugt ein Mikrowellensignal. Dies ist der übliche und gut beherrschte Frequenzbereich der TDR-Technologie. Die Rückleitung führt zwar bevorzugt, nicht jedoch notwendig, wieder ganz bis an den Messkopf heran. Die Rückleitung kann, wenn sie wieder bis an den Messkopf geführt ist, dort angeschlossen werden. Auf diese Weise kann das durchgehende Signal gemessen oder seine Energie abgeleitet werden. Ist die Rückleitung nicht vollständig bis an den Messkopf geführt oder dort nicht oder nicht mit einem passenden Widerstand abgeschlossen, so entsteht hier ein Artefaktsignal, das aber zeitlich sehr deutlich vom Messsignal separiert ist, nämlich zumindest um die Zeit für die doppelte Laufstrecke auf dem Rückleiter und daher die Messgenauigkeit nicht mehr beeinträchtigt.

Obwohl der Begriff Innenleiter in Anlehnung an eine Koaxialleitung für den Leiter gewählt wurde, auf dem das Signal ausgesendet wird, muss dieser Leiter nicht notwendig innerhalb eines anderen Leiters liegen. In mehreren Ausführungsformen ist der Innenleiter demnach nicht von dem ersten Bezugsleiter umgeben, während in anderen Ausführungsformen der erste Bezugsleiter den zugehörigen Außenleiter bildet. Entsprechende Verallgemeinerungen gelten für den Rückleiter, welcher durchaus auch ein Innenleiter sein kann, sofern in den entsprechenden Ausführungsformen die Signale in einem Koaxialleiter zurückgeführt werden. Genaugenommen ist auch der Unterschied zwischen Innenleiter und Rückleiter künstlich, da sie zumindest aus Sicht der Welle oder in der Regel auch direkt elektrisch verbunden sind und damit lediglich Abschnitte ein und desselben Leiters darstellen. In fast allen Ausführungsformen lässt sich daher durch Richtungsumkehr und Austausch des Anschlusses von Signalgenerator und -empfänger die Rolle von Innenleiter und Rückleiter vertauschen.

Rückleiter, Innenleiter und Bezugsleiter bilden in einer Ausführungsform, die nicht unter den Schutzbereich der Ansprüche fällt, eine Triaxialleitung, indem der Rückleiter innerhalb des Innenleiters angeordnet ist und der Innenleiter somit zugleich den zweiten Bezugsleiter bildet, während der erste Bezugsleiter Innenleiter und Rückleiter als Außenleiter umgibt, oder indem umgekehrt der Innenleiter innerhalb des Rückleiters angeordnet ist und somit der Rückleiter zugleich den ersten Bezugsleiter bildet, während der zweite Bezugsleiter Innenleiter und Rückleiter als Außenleiter umgibt, und wobei der Raum zwischen Innenleiter und Rückleiter nicht beziehungsweise mit Luft oder mit einem Material gefüllt ist, insbesondere einem Material niedriger Dielektrizitätskonstante wie Teflon. Obwohl in dieser Konstellation aus Sicht der Welle ein Rückleiter vorhanden ist, bleibt die Sonde ein einzelner Stab. Der Rückleiter ist somit elegant in die Sonde integriert. Soll der Raum zwischen Innenleiter und Rückleiter luftgefüllt sein, so ist damit vorteilhafterweise gemeint, dass ein Austausch mit dem Medium durch geeignete Schlitze oder Öffnungen stattfinden kann. Ist ein Material in diesem Raum vorgesehen, so sollte es eine möglichst geringe Dielektrizitätskonstante $\varepsilon_r$ aufweisen sowie unanfällig gegenüber Korrosion, schmutzabweisend und/oder leicht zu reinigen sein, um Hygienevorschriften einhalten zu können. Beispielhafte Werkstoffe mit diesen Eigenschaften sind Polytetrafluorethylen (PTFE, Teflon), Polybutylenterephthalat (PBT) und mit etwas höheren Dielektrizitätskonstanten $\varepsilon_r$, dafür einer hohen Vielfalt an möglichen Eigenschaften wie thermischer, chemischer und mechanischer Stabilität diverse Keramiken.

Der erste und der zweite Bezugsleiter sind als gemeinsamer Bezugsleiter ausgebildet, insbesondere als mittig zwischen Innenleiter und Rückleiter angeordnete Bezugsplatte, wobei insbesondere Innenleiter und Rückleiter von dem Bezugsleiter beabstandet und/oder durch elektrisch isolierende Träger mit dem Bezugsleiter verbunden sind. In dieser Ausführungsform gibt es somit nur einen Bezugsleiter mit doppelter Aufgabe und die Sonde wird damit kompakter. Die mittige Anordnung ist für symmetrische Leitungseigenschaften bevorzugt. Abweichungen hiervon im Rahmen von Fertigungstoleranzen, aber auch gezielte Abweichungen schaden aber nicht, solange die Führung durch die Bezugsleiter gewährleistet bleibt. Die Bezugsleiter ohne Träger zu beabstanden hat den Vorteil der einfacheren Fertigung und der Materialersparnis, aber dann muss die Beabstandung durch mechanische Eigenstabilität, Vorspannung und/oder zusätzliche Abstandselemente gewährleistet werden. Mit Trägern, die bevorzugt über die gesamte Länge der Sonde vorgesehen sind, ist wegen der erhöhten mechanischen Stabilität die Beabstandung und damit Vermeidung von Kurzschlüssen leichter sicherzustellen. Die Träger weisen bevorzugt erneut die im letzten Absatz genannten Werkstoffe auf, was im Übrigen innerhalb der gesamten Beschreibung für die nichtmetallischen Bestandteile der Sonde gilt.

Der Bezugsleiter ist bevorzugt als Metallkern mit in Längsrichtung verlaufenden luft- oder materialgefüllten Aussparungsnuten ausgebildet, wobei Innenleiter und Rückleiter über den Aussparungsnuten angeordnet, insbesondere Innenleiter und Rückleiter als Metallstreifen, Kupferstreifen oder Leiterbahnen auf Trägern oder Leiterplatten ausgebildet sind, welche die Aussparungsnuten abschließen. Innenleiter und Rückleiter liegen dabei nochmals bevorzugt ungefähr auf einem Außenumfang um den Metallkern in den durch die Aussparungsnuten entstehenden Lücken dieses Außenumfangs. In den Ausführungsformen mit Metallkern und Aussparungsnuten stellt sich die Sonde trotz ihrer relativ komplexen Wellenleitungseigenschaften nach Außen einfach dar und ist entsprechend einfach zu montieren und zu warten. Besonders bei Verwendung von Leiterplatten mit Leiterbahnen, aber auch bei den anderen Ausführungsformen mit beliebigen Trägern und Leitern, ist die Herstellung in einer Art Verbundkörper einfach, zuverlässig und kostengünstig. Innenleiter und Rückleiter werden durch die Aussparungsnuten elektrisch vom Bezugsleiter getrennt.

Bezugsleiter, Innenleiter und Rückleiter sind vorteilhafterweise als flexible Leiter einer Seilsonde ausgebildet, insbesondere indem der Bezugsleiter als Stahlgeflecht und Innenleiter und Rückleiter als Metalllitzen ausgeführt sind, wobei ein Isolationsmaterial die Leiter voneinander elektrisch isoliert und/oder nach außen schützt, um insgesamt ein mehradriges Kabel zu bilden. Auch bei dieser Ausführungsform stellt sich die Sonde nach Außen sehr einfach und homogen dar, sie bildet letztlich nur ein besonderes mehradriges Kabel. Seilsonden werden gerade bei großen Behältern beispielsweise mit Größenordnungen von 10 Metern zu messender Füllstände gegenüber steifen Sonden bevorzugt.

In einer Ausführungsform, die nicht unter den Schutzbereich der Ansprüche fällt, ist die Sonde als hin- und rückführende Koaxialleitung ausgebildet, bei welcher Innenleiter und erster Bezugsleiter eine Koaxialleitung von erstem Sondenende zu zweitem Sondenende und Rückleiter und zweiter Bezugsleiter eine Koaxialleitung zurück vom zweiten Sondenende zum ersten Sondenende bilden. Anders ausgedrückt ist eine Koaxialleitung als eine U-förmigen Sonde oder in einer topologisch vergleichbaren Gestalt ausgebildet. Der zweite Bezugsleiter führt hierbei die Welle auf dem Rückleiter besonders gut und der einfache mechanische Aufbau erleichtert Herstellung, Montage und Einbau.

Innen- und Rückleiter sind vorteilhafterweise differentiell ausgebildet, indem jeweils mindestens zwei Innenleiter und zwei Rückleiter vorgesehen sind. Dabei ist also vorgesehen, die Wellenleiter doppelt auszubilden, beispielsweise hat die Sonde dann die Gestalt zweier parallel zueinander liegender U-förmiger Einzelleiter mit einem gemeinsamen Bezugsleiter in der Mitte, mit jeweils einem Bezugsleiter für den Hin- und Rückweg der Signale, mit sogar vier Bezugsleitern für jeden der beiden Innen- und Rückleiter, oder Mischformen davon. In einem anderen Beispiel werden zwei Koaxialleitungen als parallel zueinander liegende U-förmige hin- und rückführende Koaxialleitungen ausgebildet. Bevorzugt wird in dem letztgenannten Beispiel der Koaxialleiter so ausgebildet, dass er die beiden differentiell geführten Innenleiter beziehungsweise Rückleiter gemeinsam umgibt, die differentiellen Leitungswege also untereinander elektromagnetisch nicht abschirmt. Die Welle läuft in differentiellen Ausführungsformen auf zwei Wegen mit unterschiedlichem Vorzeichen und Abstrahlungen nach außen kompensieren sich weitgehend, so dass EMV-Probleme vermieden oder zumindest erheblich verringert werden.

Die Verbindung zwischen Innenleiter und Rückleiter weist bevorzugt eine runde U-Form oder eine eckige U-Form mit einer Laufstrecke parallel zu der Grenzfläche auf, wobei die Verbindung hochfrequenzkompensiert ist, um Artefaktreflexe an den Winkelstellen zu unterdrücken oder zu vermeiden, wobei insbesondere die Verbindung ein separates Leitungsstück als Teil eines Abstandselements bildet. Mit dieser Verbindung stellen also Innenleiter und Rückleiter elektrisch gesehen einen einzigen grob U-förmigen Leiter dar. Dies kann auch mechanisch nachvollzogen, diese Leiter also mit der Verbindung einstückig ausgebildet sein. Die Geometrie der Verbindung kann variiert werden, so dass Abweichungen von der U-Form und deren Rundungen entstehen. Das Verbindungsstück kann als Abstandselement ausgebildet werden, um Innenleiter, Rückleiter, ersten Bezugsleiter und zweiten Bezugsleiter voneinander elektrisch isoliert und möglichst gleichmäßig beabstandet zu halten. Gerade bei kurzen Sonden kann gemeinsam mit einer entsprechenden Geometrie am Messkopf die Beabstandung hierdurch schon sichergestellt sein, zumindest wird eine zusätzliche Stützstelle gegeben.

Auf dem Rückleiter entsteht beim Übergang vom Medium zur Luft ein Reflexsignal, das sich bei niedrigen Füllständen mit dem Messsignal auf dem Innenleiter überlagern kann. Die horizontale Laufstrecke separiert diese beiden Signale zeitlich voneinander, so dass eine Totzone für niedrige Füllstände verringert oder vermieden wird. Dieser Effekt wird noch verstärkt, weil die horizontale Laufstrecke, sofern die Sonde den Behälter nicht nur teilweise durchmisst und der Behälter nicht ganz leer ist, innerhalb des Mediums liegt. Dadurch ist die Laufstrecke auf der Verbindung beziehungsweise dem Verbindungselement gegenüber Luft oder Vakuum zusätzlich verlangsamt.

In einer alternativen Ausführungsform, die nicht unter den Schutzbereich der Ansprüche fällt, ist zunächst nicht offensichtlich ein Rückleiter vorgesehen. Um das Problem mit der Totzone zu lösen, wird ein Abschlusswiderstand verwendet, welcher aber im Gegensatz zu herkömmlichen Ansätzen nicht am Ende der Sonde aufgesetzt, sondern im Innenraum des Innenleiters angeordnet wird. Auf diese Weise ist er verkapselt und kommt nicht mit dem Medium in Kontakt und auch seine endliche geometrische Ausdehnung ist innerhalb des Innenleiters integriert und beeinträchtigt somit nicht den Messbereich für besonders niedrige Füllstände. Der Abschlusswiderstand ist bevorzugt auf die voraussichtlich zu messenden Medien oder zumindest auf den Wellenwiderstand der Sonde bei leerem Behälter abgestimmt.

In einer besonders bevorzugten Ausführungsform ist der Abschlusswiderstand an dem Rückleiter vorgesehen oder an den Rückleiter angeschlossen, der innerhalb eines Messkopfes am ersten Sondenende angeordnet ist. Man kann den Abschlusswiderstand und den Leitungsabschnitt zu dem Abschlusswiderstand als Rudiment eines Rückleiters auffassen, in den die Welle ein Stück hineinläuft, um dort ihre Energie zu deponieren. Sofern der Abschlusswiderstand sehr nahe am zweiten Sondenende angeordnet ist, bleibt dieser Rückleiter sehr kurz. Je weiter der Abschlusswiderstand in verschiedenen Ausführungsformen die Sonde hinauf verschoben wird, desto mehr nähert sich die Anordnung einem vollständig bis zum Messkopf verlaufenden Rückleiter an. Ist der Abschlusswiderstand im Messkopf angeordnet, so kann wahlweise das rücklaufende Signal im Messkopf über dem Abschlusswiderstand gemessen werden, während seine Energie vom Abschlusswiderstand absorbiert wird. Die Anordnung im Messkopf hat den Vorteil, dass keinerlei direkter Kontakt mit dem Medium möglich ist und der Widerstand in die Messkopfelektronik integrierbar ist. Da kein Kontakt mit dem Medium möglich ist, sind die Leitungswiderstände wohldefiniert, so dass ein fester Abschlusswiderstand gewählt werden kann, der unabhängig vom Medium optimal abschließt.

Die Sonde ist bevorzugt hygienisch ausgebildet, insbesondere beschichtet oder mit einem Schrumpfschlauch überzogen und/oder die Sonde weist gerundete Kanten auf, wobei das Material der Sonde, der Beschichtung und/oder des Schrumpfschlauchs schmutzabweisend und/oder antibakteriell ist. Damit ist der Einsatz in Lebensmittelanwendungen, also etwa Messung von Füllständen für Nahrungsmittel oder Getränke möglich. Hygienische Materialien können erneut die oben genannten Werkstoffe Tef-Ion, PBT oder Keramiken sein, aber auch andere Kunststoffe und besonders mikrostrukturierte Beschichtungen. Weitere Materialien, die im Übrigen an jeder Stelle der Beschreibung als Ersatz für das häufig genannte Teflon dienen können, sind alle Arten von fluorierten Kunststoffen sowie PEEK (Polyetherketon), PP (Polypropylen), PET (Polyethylenterephthalat), PPSU (Polyphenylsulfon) oder PC (Polycarbonat, Makrolon).

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben. Umgekehrt ist die Steuerung bevorzugt dafür ausgebildet, eines der erfindungsgemäßen Auswertungsverfahren auszuführen.

Bei dem Verfahren werden bevorzugt einzelne oder Kombinationen der folgenden Signale für die Messung berücksichtigt werden: das ausgesandte Signal, ein erstes Reflexsignal, das beim Auftreffen in Senderichtung auf die Grenzfläche entsteht, ein zweites Reflexsignal, das beim Auftreffen in Gegenrichtung auf die Grenzfläche entsteht und ein durchlaufendes Signal, welches von dem Innenleiter auf den Rückleiter und zurück zu dem Messkopf geführt und dort insbesondere in einem Abschlusswiderstand absorbiert wird. Das ausgesandte Signal beziehungsweise das Sendesignal bildet das Bezugssignal. Die weiteren Signale stehen außer dem ersten Reflexsignal, auf dem allein herkömmliche TDR-Sonden beruhen, überhaupt nur aufgrund des erfindungsgemäß vorgesehen Rückleiters zur Verfügung. Sie ermöglichen fortgeschrittene Auswertungen mit wesentlich größerer Flexibilität, Genauigkeit und Vermeidung einer Totzone bei niedrigen Füllständen und die Messung schwieriger Konstellationen, also niedriger relativer Dielektrizitätskonstanten, variabler Behältergrößen und -materialien, Einbauorte des Sensors und mehrschichtiger Medien.

Als ein bevorzugtes Messverfahren werden das erste und zweite Reflexsignal ausgewertet, insbesondere deren Abstand zueinander, wobei nochmals bevorzugt dieser Abstand durch eine horizontale Laufstrecke zwischen Innenleiter und Rückleiter vergrößert ist und/oder wobei die Laufzeit des durchlaufenden Signals anhand einer Verzögerung durch die Laufstrecke zwischen Durchtritt durch die Grenzfläche auf dem Innenleiter in Senderichtung und Durchtritt durch die Grenzfläche auf dem Rückleiter in Gegenrichtung ausgewertet wird. Dieses Verfahren ist besonders genau und ermöglicht, die Totzone zu vermeiden.

Die relative Dielektrizitätskonstante des die Grenzfläche bildenden Mediums und insbesondere daraus auch die Art des Mediums selbst wird bevorzugt anhand einer Laufzeitverzögerung zwischen erstem und zweitem Reflexsignal oder des durchlaufenden Signals bestimmt. Damit kann nicht nur auf das Material rückgeschlossen werden, um es anzuzeigen, das Füllstandsmessverfahren kann sich anhand des somit dynamisch bestimmten Materials auch nachkalibrieren, beispielsweise bestimmte Parameter schätzen wie eine Verzögerung der Laufzeit im Bereich des Mediums.

Je nach konkret angewandtem Verfahren gibt es diverse Abhängigkeiten zwischen Laufstrecken, Ausbreitungsgeschwindigkeiten, Füllständen, Signalformen, Sondenlänge und relativer Dielektrizitätskonstanten, so dass bei Bedarf eine Hilfs- oder Eichmessung einer solchen Größe dem eigentlichen Betrieb vorausgeht. Beispielsweise kann die Sondenlänge und damit die Laufzeit des durchlaufenden Signals ohne Behälter vorgegeben, aber alternativ auch durch eine Eichmessung ohne Medium vorab bestimmt werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Fig. 1     eine schematische Darstellung eines TDR-Sensors in einer Anwendung als Füllstandssensor nach dem Stand der Technik;

Fig. 2     ein Blockschaltbild der Steuerung nach dem Stand der Technik des Sensors gemäß Figur 1;

Fig. 3     eine Ausführungsform eines Sensors mit einem Abschlusswiderstand im Innenleiter;

Fig. 4     eine Ausführungsform eines Sensors mit einem Abschlusswiderstand im Messkopf;

Fig. 5     eine Ausführungsform eines Sensors als offener Triaxialleiter mit einem Abschlusswiderstand im Messkopf;

Fig. 6     ein Ersatzschaltbild des Sensors gemäß Fig. 5 repräsentativ auch für andere Ausführungsformen eines TDR-Sensors mit Rückleiter;

Fig. 7     eine grafische Darstellung von Pulsen an verschiedenen Kontaktpunkten in dem Ersatzschaltbild gemäß Fig. 6;

Fig. 8a     eine beispielhafte grafische Darstellung eines ersten und zweiten Reflexpulses bei relativ hohem Füllstand;

Fig. 8b     eine Darstellung gemäß Fig. 8a bei niedrigem Füllstand;

Fig. 8c     eine Darstellung gemäß Fig. 8a bei sehr niedrigem Füllstand;

Fig. 9a     eine Ausführungsform eines Sensors mit durchgehendem u-förmigem Koaxialleiter;

Fig. 9b     eine Querschnittsdarstellung der Sonde des Sensors gemäß Fig. 9a;

Fig. 9c     eine Ausschnittsvergrößerung des Umkehrbereichs des Sensors gemäß Fig. 9a;

Fig. 10a     eine Ausführungsform eines Sensors ähnlich Fig. 9, hier mit eckiger Sondenführung;

Fig. 10b     eine Querschnittsdarstellung der eckigen Sonde und Leiter gemäß Fig. 10a;

Fig. 11     eine Vielzahl von Querschnitten analog Fig. 10b verschiedener Ausführungsformen von Leiter- und Sondenquerschnitten;

Fig. 12     eine Querschnittsdarstellung des Verbindungsbereichs zwischen Innenleiter und Rückleiter in einer Ausführungsform als Abstandshalteelement;

Fig. 13     drei Querschnittsdarstellungen zur Illustration der Beziehung zwischen einer Sonde aus Koaxialleitern und zweier Einzelleiter mit einer gemeinsamen Bezugsplatte beziehungsweise -leitung;

Fig. 14a     zwei Varianten einer erfindungsgemäßen Sonde mit von einer gemeinsamen Bezugsplatte ohne Träger beabstandetem Innenleiter und Rückleiter im Querschnitt;

Fig. 14b     zwei Varianten einer erfindungsgemäßen Sonde ähnlich Fig. 14a mit von einer gemeinsamen Bezugsplatte mit Träger beabstandetem Innenleiter und Rückleiter im Querschnitt;

Fig. 15     eine Querschnittsdarstellung einer weiteren Ausführungsform einer erfindungsgemäßen Sonde mit einem Metallkern und durch Leiterplatten abgeschlossenen Aussparungsnuten sowie dem Feldlinienverlauf darin;

Fig. 16a     eine Querschnittsdarstellung einer Variante der Ausführungsform gemäß Fig. 15 mit offenen oder luftgefüllten Aussparungsnuten;

Fig. 16b     eine Querschnittsdarstellung einer Variante der Ausführungsform gemäß Fig. 15 mit materialgefüllten Aussparungsnuten;

Fig. 17     eine Darstellung zur Erläuterung einer differentiellen Sonde;

Fig. 18a-f     Querschnittsdarstellungen verschiedener Varianten einer erfindungsgemäßen Sonde mit differentieller Wellenführung mit diversen Leiterquerschnitten und Trägern zur Beabstandung der Leiter untereinander;

Fig. 19a     eine Querschnittsdarstellung einer Ausführungsform der Erfindung als Seilsonde in einem mehradrigen Kabel;

Fig. 19b     eine Darstellung gemäß Fig. 19a in einer Variante mit anderer Gestalt der Leitungsadern und des isolierenden Kabelmaterials;

Fig. 20a     eine Darstellung ähnlich Fig. 16 einer differentiellen Ausführungsform mit einem Metallkern und differentiell ausgeführten Innen- und Rückleitern mit einem flexiblen Schrumpfschlauch als äußere Hülle; und

Fig. 20b     eine Darstellung gemäß Fig. 20a mit einer Rohrhülle.

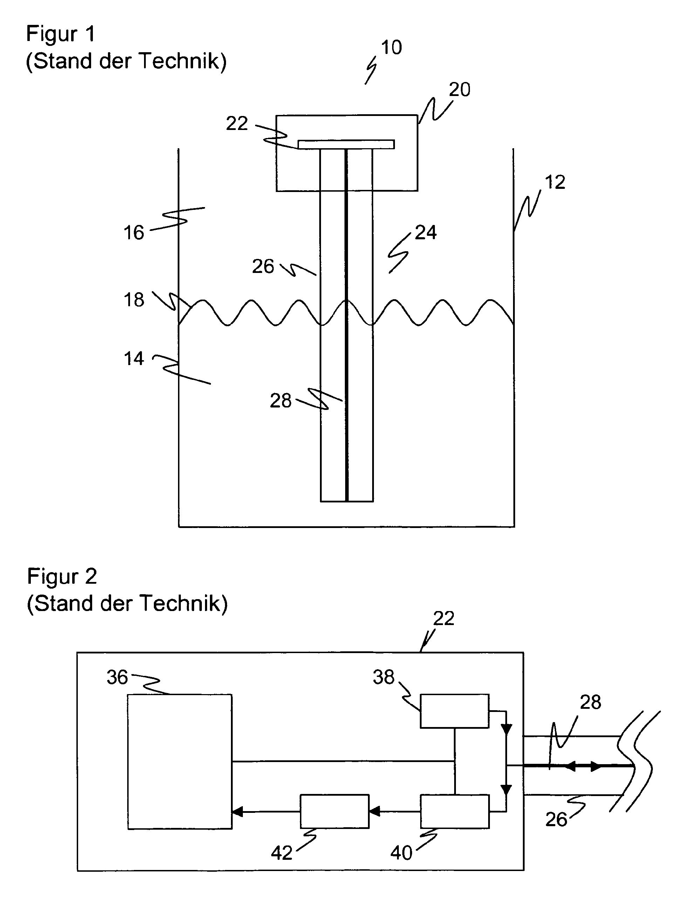

Die Figuren 1 bis 12 zeigen bekannte oder alternative Ausführungsformen, die nicht unter den Schutzbereich der Ansprüche fallen.

Figur 1 zeigt schematisch einen geschlossenen TDR-Sensor 10 nach dem Stand der Technik, der als Füllstandssensor in einem Tank oder Behälter 12 mit einem Medium oder einer Flüssigkeit 14 angebracht ist. Hier und im Folgenden bezeichnen gleiche Bezugszeichen dieselben oder sinngemäß entsprechenden Elemente, beispielsweise wird das Bezugszeichen 10 weiter unten auch für erfindungsgemäße Sensoren verwendet, welche ebenfalls den Grundaufbau des Sensors gemäß Figuren 1 und 2 zeigen.

Die Flüssigkeit 14 bildet gegenüber der Luft 16 eine Grenzfläche 18. Der Sensor 10 ist dafür ausgebildet, die Entfernung der Grenzfläche 18 zu ermitteln und daraus aus seiner bekannten Anbringungslage den Füllstand und bei Bedarf anhand der Geometrie des Behälters 12 auch die Menge der Flüssigkeit 14 abzuleiten. Obwohl die Ausbildung des Sensors 10 als Füllstandssensor ein sehr wichtiges Einsatzfeld ist, kann der Sensor 10 prinzipiell auch in anderen Gebieten eingesetzt werden, bei denen eine Grenzfläche zu lokalisieren ist. Dabei ist insbesondere an andere Grenzflächen 18 zu denken, beispielsweise zwischen verschiedenen Flüssigkeiten oder zu und zwischen Schüttgut oder Granulaten.

Der Sensor 10 weist einen Sensorkopf 20 mit einer Steuerung 22 auf, die vorzugsweise auf einer gemeinsamen Platine untergebracht ist. Alternativ sind mehrere über Stecker verbundene Leiterplatten oder Flexprintträger denkbar. An die Steuerung 22 ist eine koaxiale Sonde 24 angeschlossen, welche einen Außenleiter 26 und einen Innenleiter 28 aufweist.

Die in dem Sensorkopf 20 vorgesehene Steuerung 22 beziehungsweise ihre Platine ist in Figur 2 in einem Blockschaltbild dargestellt. Die eigentliche Steuerung bildet ein Mikroprozessor 36, der auch ein FPGA, ASIC oder ein ähnlicher digitaler Logikbaustein sein kann. Üblicherweise ist auch eine hier nicht dargestellte Zeitbasisschaltung zur Ansteuerung eines Mikrowellensenders 38 und eines Mikrowellenempfängers 40 vorgesehen. Die Sende- und Empfangseinheit 38, 40 wird von der Zeitbasisschaltung mit zwei leicht unterschiedlichen Frequenzen angesteuert, um durch das Verfahren der Unterabtastung einer Vielzahl von Empfangspulsen eine zeitgedehnte Aufnahme der Empfangspulsprofile zu erreichen. Diese Zeitdehnung ist erforderlich, weil Bausteine, welche die extrem kurzen Pulse mit genügender Auslösung digitalisieren könnten, entweder noch gar nicht existieren oder jedenfalls viel zu kostenintensiv wären. Grundsätzlich ist natürlich auch ein direktes Sampling ohne Zeitbasisschaltung vorstellbar.

Über einen Verstärker 42 wird das zeitgedehnte Messsignal an den Mikroprozessor 36 zur Messsignalauswertung geleitet. Bevorzugt ist der Verstärker 42 in der Lage, sich auf den Signalpegel einzustellen und somit unter Ausnutzung der Auflösung des Analog-Digitalwandlers auch kleine Messsignale auswerten zu können.

Wie auch schon einleitend beschrieben, wird bei einer Messung ein Puls über den Mikrowellensender 38 auf den Innenleiter 28 gegeben und die Laufzeit des an der Grenzfläche 18 entstehenden und in dem Mikrowellenempfänger 40 empfangenen Reflexpulses gemessen, um den Abstand der Grenzfläche 18 und damit den Füllstand in dem Behälter 12 zu ermitteln. Dieses Verfahren ist bekannt, erfindungsgemäße Erweiterungen werden weiter unten näher ausgeführt. Anstelle eines Pulses können in allen Ausführungsformen auch andere Signalformen verwendet werden, wie einleitend beschrieben.

Sowohl bei dem in den Figuren 1 und 2 dargestellten Sensor 10 als auch bei den erfindungsgemäßen Ausführungsformen weisen die Leiter, hier der Außenleiter 26, Schlitze oder andere geeignete Öffnungen auf, um einen Flüssigkeits- beziehungsweise Messmediumaustausch zu ermöglichen, soweit dieser Austausch gewünscht ist. Im Folgenden wird häufig nur von luftgefüllt gesprochen, damit ist zumeist dieser Austausch mit der Umgebung gemeint.

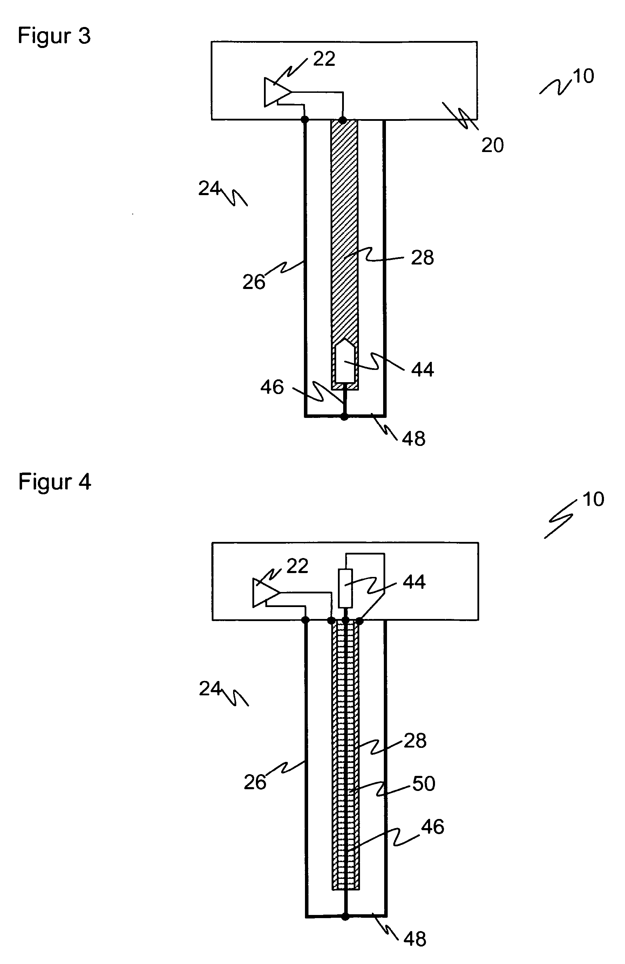

Figur 3 zeigt eine erste Ausführungsform eines erfindungsgemäßen Sensors 10. Dabei sind zur besseren Übersicht hier und im Folgenden die Steuerungselemente in dem Sensorkopf 20 nur ganz rudimentär als Steuerung 22 in Form eines Pulserzeugungsgenerators dargestellt. Die übrigen Elemente der Steuerung 22 sind analog der Beschreibung zu Figur 2 zu wählen.

In dem Innenleiter 28 der koaxialen Sonde 24 ist ein Abschlusswiderstand angeordnet. Die Abschlussimpedanz ist auf den Wellenwiderstand abgestimmt. Um das Messmedium 14 bei der Abstimmung zu berücksichtigen, kann entweder jeweils eine zu dem Medium 14 passende Abschlussimpedanz gewählt werden, oder man wählt als Kompromiss eine Abschlussimpedanz, welche zwar nicht genau passt, aber für eine große Breite von Medien einigermaßen geeignet ist. Der Artefaktpuls am Ende der Sonde 24 wird dann zwar nicht verhindert, aber zumindest weitgehend unterdrückt.

Die eine Seite des Widerstands 44 steht in direktem Kontakt mit dem Innenleiter 28. Die andere Seite ist beispielsweise über einen metallischen Draht 46 oder eine andere leitende Verbindung an den Außenleiter 26 angeschlossen. Der Draht 46 kann dabei aus dem gleichen Material wie der Außenleiter 26 der Sonde 24 bestehen. Die Durchführung des Drahtes 46 zu dem Widerstand 44 im Bereich des Innenleiters ist isoliert und bildet ein zumindest infinitesimales Stück eines Rückleiters für die Welle. Das Ende des Außenleiters 26 ist mit einer elektrisch leitenden Bodenplatte 48 versehen und bildet den zweiten Anschlusspunkt für den Abschlusswiderstand 44. Bei dieser Anordnung kommt nur eine minimale Anzahl von unterschiedlichen Materialien in Berührung mit dem Medium 14. Gleichzeitig sind auch sehr niedrige Füllstände bis hinab zur Oberseite der Abschlussplatte 48 messbar. Aufgrund deren geringer Dicke ist somit eine Füllstandsmessung bis in unmittelbare Nähe des Bodens des Behälters 12 möglich.

Der Außenleiter 26 und die Bodenplatte 48 sind zusätzlich mit Schlitzen oder Öffnungen versehen, durch welche das Medium 14 zu- und abfließen kann.

Am unteren Ende der Sonde 24 auftretende Feldverzerrungen durch die Umlenkung auf den Widerstand 44 lassen sich mittels geeigneter Detailgestaltung einiger oder aller Leitungselemente 26, 48, 46, 44, 28 breitbandig kompensieren. Die anzuwendenden Techniken sind grundsätzlich aus der Sender- und der Antennentechnik bekannt. Zur Durchführung dieser Optimierung auf theoretischer Ebene sind auch eine Vielzahl von geeigneten Hochfrequenz-Simulationsprogrammen erhältlich.

Figur 4 zeigt als weitere erfindungsgemäße Ausführungsform eine Abwandlung, bei welcher der Widerstand 44 nicht am Ende der Sonde 24, sondern in dem Sensorkopf 20 angeordnet ist. Die Erfindung umfasst weiterhin auch alle Zwischenvarianten mit Anordnung des Widerstands irgendwo längs des Innenleiters 28 zwischen den beiden Extremsituationen der Figuren 3 und 4.

Aus Sicht des Pulses beziehungsweise der Welle ist es gleichwertig zu einem Abschlusswiderstand am unteren Ende der Sonde 24 wie in Figur 3, den Innenleiter 26 durch eine weitere Koaxialleitung mit entsprechender Impedanz zu ersetzen und diese an deren Ende auf Seiten des Sensorkopfes 20 abzuschließen. Es entsteht eine Triaxialleitung aus dem Außenleiter 26, dem Innenleiter 28 und einem im Inneren des Innenleiters angeordneten Rückleiter 46, wobei Innenleiter 28 und Rückleiter 46 eine innere Koaxialleitung bilden. Dabei ist der Innenleiter 28 weiterhin mit dem Mikrowellenempfänger 40 der Steuerung 22 verbunden, außerdem besteht aber über den Widerstand 44 eine elektrische Verbindung zwischen Innenleiter 28 und Rückleiter 46 im Sensorkopf 20. Die innere Koaxialleitung ist mit einem Material 50 gefüllt, beispielsweise mit Teflon oder einem anderen Material, vorzugsweise mit geringer relativer Dielektrizitätskonstante. Flüssigkeit kann in ihr folglich nicht aufsteigen und es sind auch keine Öffnungen in dem Innenleiter 26 für den Flüssigkeitsaustausch vorgesehen. Die Impedanz der inneren Koaxialleitung und des Widerstands 44 sind bevorzugt aufeinander abgestimmt, insbesondere in etwa untereinander gleich.

Man kann die Anordnung der Figur 4 auch so beschreiben, dass der im Innenleiter 28 angebrachte Abschlusswiderstand 44 in Figur 3 durch eine Semi-Rigid-Koaxialleitung ersetzt wird, um den Abschluss an einem günstigeren Ort im Geräteinneren platzieren zu können. Derartige Semi-Rigid-Leitungen mit einem Wellenwiderstand von beispielsweise 50 Ohm sind weit verbreitet und daher vergleichsweise kostengünstig erhältlich. Der Wellenwiderstand der inneren Koaxialleitung bleibt wegen des fest eingebauten Dielektrikums unabhängig vom Füllstand stets konstant. Somit kann die Sonde 24 immer optimal und vorhersagbar mit ihrem Wellenwiderstand abgeschlossen und ein die Messung störender Artefaktpuls vermieden werden. Man kann auch den Wellenwiderstand der äußeren Koaxialleitung, also von Außenleiter 26 und Innenleiter 28, absichtlich etwas höher wählen als diejenige des Innenleiters und den Abschlusswiderstand dann so dimensionieren, wie man dies bei einer einfachen Koaxialleitung tun würde.

Ein besonderer Vorteil der Anordnung gemäß Figur 4 ist, dass sich der Abschlusswiderstand 44 nicht im Medium 14, sondern im Sensorkopf 20 befindet und somit für einen Feinabgleich leicht zugänglich ist. Gleichzeitig ist der benötigte Bauraum am Ende der Sonde 24 minimiert.

Schließlich kann neben dem üblicherweise verwendeten Reflektionssignal nun auch das Durchgangssignal bei der Bestimmung des Füllstandes oder anderer Mediumeigenschaften als zusätzliche Messgröße herangezogen werden. Dazu muss die Steuerung 22 und deren Mikrowellenempfänger 40 beziehungsweise die Abtastschaltung in geeigneter Weise auch an den Rückleiter 46 angeschlossen werden. In einer anderen Ausführungsform ist ein zusätzlicher Mikrowellenempfänger für den Rückleiter 46 vorgesehen.

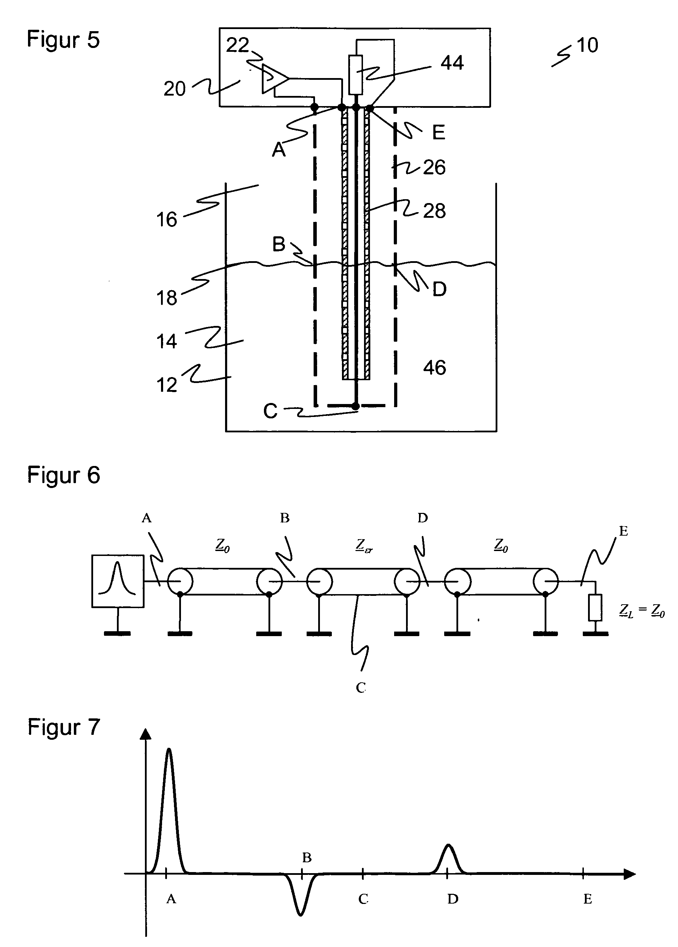

Figur 5 zeigt eine weitere Ausführungsform der Erfindung. Im Unterschied zu der Ausführungsform der Figur 4 ist die innere Koaxialleitung hier nicht mit einem Material 50, sondern luftgefüllt und steht wie auch der Außenleiter 26 durch Öffnungen im Austausch mit der Umgebung und dem Medium 14. Innerhalb des Innenleiters 28 ist also bei dieser Ausführungsform kein Dielektrikum vorgesehen und es ergibt sich ein offener triaxialer Aufbau. In der Praxis lässt sich bei den Ausführungsformen gemäß Figuren 3 und 4 nicht immer jede ortsfeste Fehlanpassung im Bereich des Endes der Sonde 24 vermeiden, so dass ein Artefaktpuls messbar bleibt, weshalb die an dieser Stelle reflektierten Wellen sich insbesondere bei niedrigen Füllständen dem gesuchten Füllstandssignal ungünstig überlagern und zu einem Messfehler führen können. Das Problem ist besonders ausgeprägt bei niedriger relativer Dielektrizitätskonstante $\varepsilon_r$ des Mediums 14. In den weiteren Ausführungsformen wird diese Fehlerquelle vermieden, im Falle der Ausführungsform gemäß Figur 5 mit einem vollständigen Rückleiter 46 in einer offenen Triaxialsonde.

Der Rückleiter 46 ist unten an der Sonde 24 mit dem Außenleiter 26 verbunden. Bevorzugt ist dieser Anschluss hochfrequenztechnisch kompensiert, es entstehen hier also keine Reflexpulse oder sonstigen Störeffekte.

Durch die Rückleitung der Messpulse auf dem Rückleiter 46 sind Erweiterungen des Messverfahrens ermöglicht, welche andere Messwerte zugänglich machen, die Genauigkeit der Bestimmung der Lage der Grenzfläche 18 und damit der Füllstandsbestimmung erhöhen und den Messbereich praktisch ohne Totzone bis zum Boden des Behälters 12 erweitern.

In Figur 5 sind einige Positionen im Verlauf des Pulses in der Sonde 24 mit den Buchstaben A bis E bezeichnet. Zum besseren Verständnis zeigt Figur 6 ein Ersatzschaltbild der Sonde 24 und Figur 7 einen beispielhaften Intensitätsverlauf am Einspeisepunkt des Sendesignals mit den durch die verschiedenen Grenzflächen verursachten Reflexionen, wobei jeweils dieselben Positionen mit den Buchstaben A bis E markiert sind.

Zunächst wird an Position A der relativ starke und positiv dargestellte Sendepuls ausgesandt. Er läuft bei einem Vakuumwellenwiderstand $Z_0$ zwischen Außenleiter 26 und Innenleiter 28 bis zu der Grenzfläche 18 an Position B, wo der Übergang von Luft in das Medium 14 liegt. An dieser Stelle B wird ein Teil der Sendeenergie zurückreflektiert und um 180° phasengedreht, so dass ein negativer erster Reflexpuls entsteht. Dies ist der herkömmlich bekannte Messpuls. Der verbleibende Teil pflanzt sich als fortlaufende Welle im Medium 14 nun gegenüber dem Wellenwiderstand $Z_{\varepsilon r}$ des Mediums 14 fort.

Bei guter hochfrequenztechnischer Auslegung der Sonde 24 bildet das untere Ende an Position C, dem physikalischen unteren Sondenende, für das elektrische Signal keine Störstelle, so dass sich die Welle ungestört weiter ausbreiten kann und zwischen Rückleiter 46 und Innenleiter 26 zurückgeführt wird. Erst an Position D, wenn die Welle nun von unten her auf die Grenzfläche 18 triff, kommt es zu einer weiteren Reflexion am Übergang vom Medium zu Luft. Die Amplitude dieses zweiten Reflexpulses ist prinzipiell kleiner als die des ersten Reflexpulses von Position A. Das an der Störstelle bei D verursachte Echo ist nicht phasengedreht, weil der einlaufende Puls von einem niedrigen Wellenwiderstand zu einem höheren hin übergeht und hat daher dasselbe Vorzeichen wie der Sendepuls und das umgekehrte Vorzeichen wie der erste Reflexpuls.

Der verbleibende Rest des Sendepulses läuft in dem anschließenden, mit Luft gefüllten Teil der Sonde 24 erneut bei dem Vakuumwellenwiderstand $Z_0$ zurück zu dem Sensorkopf 20. Dort bei Position E ist das Ende des Rückleiters 46 mit der optimalen Abschlussimpedanz des Widerstands 44 abgeschlossen. Deshalb wird die eintreffende Energie weitestgehend absorbiert und es gibt kein weiteres Reflexionssignal zurück zur Quelle. Analog der Darstellung in Figur 7 kann man auch den durchlaufenden Puls an Position E bestimmen, der in dem Widerstand 44 absorbiert wird.

Entgegen der Darstellung kann je nach Ausführungsform die äußere oder die innere Koaxialleitung als Einspeisepunkt für den Sendepuls gewählt werden. Dies ist ein Spezialfall der eingangs genannten prinzipiellen Vertauschbarkeit von Innenleiter 28 und Außenleiter 26, welcher in praktisch allen Ausführungsformen gegeben ist.

Für die Auswertung stehen daher je nach Ausführungsform die folgenden Pulse zur Verfügung: der erste Reflexpuls von Position B beim Übergang Luft zu Medium 14, der zweite Reflexpuls umgekehrten Vorzeichens von Position D beim Übergang Medium 14 zu Luft und der durchgehende Puls von Position E. Einen störenden Artefaktpuls bei Position C dagegen gibt es erfindungsgemäß bei entsprechend optimierter Ausgestaltung der Sonde 24 nicht, oder er ist bei verbleibenden Fehlanpassungen im unteren Bereich der Sonde 24 zumindest weitgehend unterdrückt.

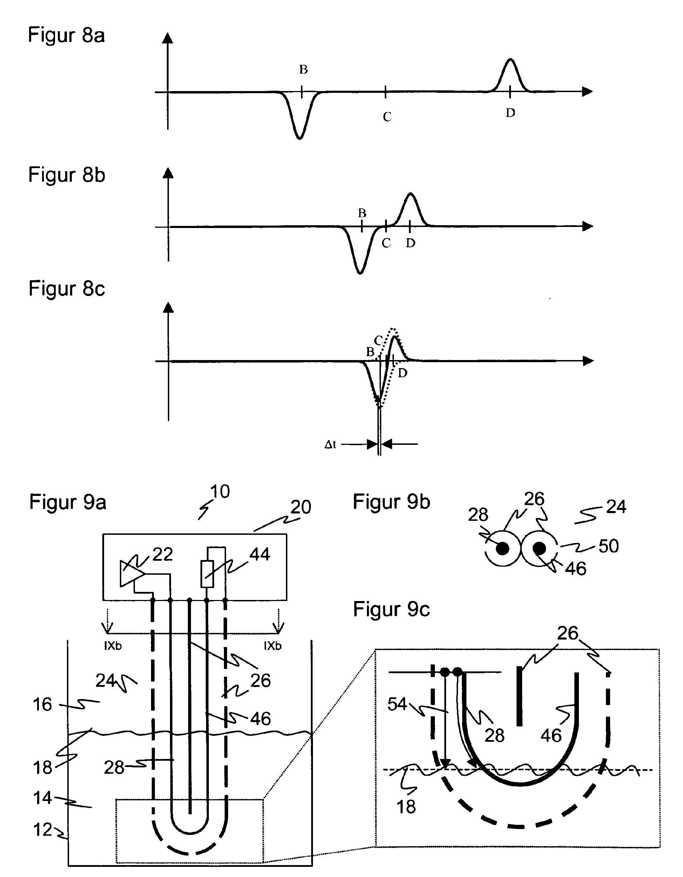

Figur 8a-c illustriert in je einem Intensitätsverlauf bei drei verschiedenen Füllständen, wie erster und zweiter Reflexpuls für eine genauere Füllstandsmessung verwendet werden können. Aus Gründen der besseren Übersicht sind die Sendepulse, die das Bezugssignal insbesondere für den Sendezeitpunkt bilden, nicht dargestellt. Diese beiden an den Störstellen B und D detektierten Reflexpulse sind allein durch die Füllstandshöhe des Mediums 14 in der Sonde 24 bestimmt.

Im Falle der Figur 8a bei höherem Füllstand sind die beiden Reflexpulse an den Positionen B und D sehr deutlich separiert und können ohne jede Schwierigkeit detektiert werden. Auch bei niedrigerem Füllstand wie in Figur 8b bleiben die beiden Reflexpulse allein aufgrund des unterschiedlichen Vorzeichens problemlos separierbar. Bei weiter sinkendem Füllstand können die Echosignale ineinander laufen und sich überlagern. Trotzdem kann auf die einzelnen Ursprungssignale zurück geschlossen werden.

Figur 8c zeigt beispielhaft einen sehr niedrigen Füllstand. Die beiden Reflexpulse haben sich gegenüber den einzelnen Pulsen (gestrichelt) so weit aneinander angenähert, dass sie sich überlagern. Es ergibt sich ein sehr steiler Nulldurchgang, welcher die Form des auszuwertenden Signals deutlich verändert. Dies muss bei der Auswertung berücksichtigt werden. Beispielsweise sind aufgrund der zeitlichen Überlagerung der beiden Reflexpulse im Summensignal die Amplituden gesunken. Diese relative Verringerung kann als Maß zur Ermittlung des Füllstandes im unteren Bereich der Sonde 24 herangezogen werden. Bei nicht angepasster Signalauswertung, also einer Messung zwischen den Amplitudenspitzen von Sende- und Reflektionssignalen, würde die Spitze des Echosignals um die Laufzeit $\Delta t$ näher gemessen. Dies entspricht einem scheinbar zu nah gemessen Reflexionssignal, was gleichbedeutend mit einem zu hohen Füllstand ist.

Das Summensignal zweier überlagerter Pulse gleichen Vorzeichens in diesem geringen Abstand, wie es herkömmlich aus Messpuls und Artefaktpuls entstehen würde, wäre zu einem einzigen Summenpuls verschmolzen und überhaupt nicht mehr separierbar. Die erfindungsgemäße Auslegung der Sonde 24 führt deshalb zu einer deutlich verbesserten zeitlichen Separierung, als dies mit dem Restartefaktpuls des herkömmlichen notwendig nicht optimal anpassbaren Abschlusswiderstands möglich wäre.

Schließlich ist auch die Verschmelzung der beiden Reflexpulse, wie sie in Figur 8c dargestellt ist, durch die verlangsamte Ausbreitungsgeschwindigkeit zwischen den Positionen B und D entschärft. Grund dafür ist, dass das Medium 14 über seine relative Dielektrizitätskonstante Wert sowohl den wirksamen Wellenwiderstand als auch die Ausbreitungsgeschwindigkeit der elektrischen Welle beeinflusst. Bei einer Koaxialleitung gilt:

$$v_\varepsilon = \frac{c_0}{\sqrt{\varepsilon_r}}$$

mit:

$V_\varepsilon$ :   Ausbreitungsgeschwindigkeit im Medium
$c_0$ :   Lichtgeschwindigkeit
$\varepsilon_r$ :   Dielektriziätskonstante des Mediums

Praktisch führt dies dazu, dass sich die Laufzeit des Pulses zwischen den Übergängen B und D an der Grenzfläche 18 merklich erhöht und so die beiden Reflexpulse zeitlich voneinander separiert.

Der zweite Reflexpuls ist also nicht wie der Artefaktpuls ein Störsignal. Er trägt im Gegenteil die Messinformation redundant noch einmal in sich. Selbst wenn man ihn nur als Störsignal auffassen wolle, bliebe zumindest sicher gestellt, dass seine Amplitude immer kleiner ist als diejenige des ersten Reflexpulses. Dieser Artefaktpuls wäre also wesentlich kleiner, quasi ein an das Medium 14 angepasster Abschlussreflexpuls. Es ist weiter sichergestellt, dass das erste und das zweite Echo entgegengesetzte Vorzeichen haben, wodurch die Separierung prinzipiell und algorithmisch erheblich vereinfacht ist. Bei sinkendem Füllstand wandern die beiden Reflexpulse aufeinander zu. Bei sehr niedrigem Füllstand können die beiden Reflexpulse ineinander laufen, wobei das dafür erforderliche Niveau noch davon abhängt, wie niedrig die relative Dielektrizitätskonstante des Mediums 14 ist. Sie bleiben dann aber weiterhin separabel.

Als weitere Mess- oder Korrekturgröße kann auch die Durchlaufzeit vom Sender 38 bei Position A bis zum Abschlusswiderstand 44 bei Position E herangezogen werden. Wegen der im Bereich zwischen B und D durch das Medium 14 verzögerten Laufzeit ist diese Durchlaufzeit um einen Wert verzögert, welcher abhängig von der relativen Dielektrizitätskonstanten des Mediums 14 proportional dem Füllstand ist. Mit Medium 14 innerhalb der Sonde 24 ist die Durchlaufzeit deshalb auch immer größer als bei leerer Sonde 24 beziehungsweise leerem Behälter 12 und nähert sich mit zunehmend leerem Behälter 12 dem der Durchlaufzeit bei leerer Sonde 24 an. Die Durchlaufzeit bei leerer Sonde 24 kann als Bezugs- oder bzw. Referenzgröße dienen. Dieser Wert ist mechanisch bestimmt und entweder im Voraus bekannt oder durch eine Kalibrierungsmessung bei leerem oder ohne Behälter 12 ohne weiteres bestimmbar.

Es sind eine Reihe weiterer Messverfahren vorstellbar. Dabei ist algorithmisch allenfalls die Bestimmung der Pulslagen aufwändig. Es ist dann ohne großen Zusatzaufwand möglich, mehrere der hier beschriebenen Verfahren kumulativ anzuwenden und gegeneinander zu plausibilisieren oder gemeinsame Messwerte statistisch zu ermitteln.

Einen ersten Messwert für den Füllstand liefert die bekannte Auswertung der Laufzeit des ersten Reflexpulses. Mit Hilfe des zweiten Reflexpulses ist wie oben zu Figur 8 beschrieben eine von Artefakten ungestörte erweiterte Auswertung möglich. Bei bekannter relativer Dielektrizitätskonstante kann auch aus der Lage des zweiten Reflexpulses allein der Füllstand bestimmt werden. Unter derselben Voraussetzung kann der Füllstand auch der Laufzeitdifferenz zwischen erstem Reflexpuls und zweitem Reflexpuls entnommen werden. Schließlich liefert wiederum unter der Voraussetzung einer bekannten relativen Dielektrizitätskonstanten auch die Durchlaufzeit einen Messwert für den Füllstand. Bei all diesen Verfahren kann der Sendepuls den Bezug bilden.

Die Länge der Sonde bestimmt sich aus der Durchlaufzeit bei leerem Behälter 12. Die Durchlaufzeit bei bekanntem Füllstand liefert aus relativ einfachen mathematischen Zusammenhängen die relative Dielektrizitätskonstante. Daraus kann, bis auf Mehrdeutigkeiten bei gleicher relativer Dielektrizitätskonstante, sogar die Art des Mediums 14 im Klartext benannt werden, sofern eine Tabelle mit möglichen Medien 14 und zugehörigen Dielektrizitätskonstanten hinterlegt ist. Die relative Dielektrizitätskonstante kann ebenso aus dem Abstand der beiden Reflexpulse untereinander ermittelt werden.

Es wird nicht nur die Lage des Schwerpunkts oder Extremums der Pulse beeinflusst, sondern auch die Pulsform zumindest hinsichtlich Vorzeichen und Amplitude. Auch die Pulsform kann deshalb neben der Pulslage für die Messung herangezogen werden. Dies ist etwas aufwändiger und setzt zumeist Kenntnis der Ausgangs-Pulsformen voraus. Diese wiederum lässt sich mit Hilfe des Durchgangssignals recht einfach ermitteln. Weiterhin kann sich die Laufzeitmessung neben dem Extremum des Pulses auf jedes andere Charakteristikum beziehen, welches sich mathematisch extrahieren lässt.

Soweit in den soeben angegebenen Möglichkeiten eine Messung nur in Abhängigkeit einer anderen möglich ist, also beispielsweise die Messung des Füllstands in einigen Verfahren nur unter Voraussetzung einer bekannten relativen Dielektrizitätskonstanten, so können diese Größen entweder vorgegeben oder in Einlern-/Eichmessungen vorab bestimmt werden. Beispielsweise misst man zunächst die Länge der Sonde 24 bei leerem Behälter, füllt diesen dann voll, misst erneut für die relative Dielektrizitätskonstante und kann anschließend Füllstände messen.

Da nicht alle Verfahren für die Bestimmung des Füllstands die Kenntnis der relativen Dielektrizitätskonstanten verlangen, kann man sich in einer Art Bootstrap-Initialisierung iterativ sowohl den Füllstand als auch die Dielektrizitätskonstante erschließen, indem man zunächst nur die von der Dielektrizitätskonstanten unabhängigen Verfahren für die Füllstandshöhe einsetzt, mit diesem möglicherweise noch ungenauen Füllstand die Dielektrizitätskonstante schätzt, daraus wieder den Füllstand und so weiter, bis eine geforderte Genauigkeit erreicht ist. Alternativ beginnt man mit einem plausiblen, aber ohne Kenntnis des tatsächlichen Mediums 14 oder dessen Füllstand festgelegten Anfangswert, misst damit die abhängigen Größen und korrigiert iterativ den Anfangswert.

Man könnte sogar die aktuelle Dielektrizitätskonstante schätzen und damit einen Abschlusswiderstand am unteren Ende der Sonde 24 dynamisch anpassen, welcher bevorzugt wie in Figur 3 innerhalb des Innenleiters 28 angeordnet ist, aber auch wie bekannt außen angeordnet sein kann. Nach einer kurzen Kalibrierungsphase für diesen Abschlusswiderstand könnte man dann mit einer perfekt abgestimmten einfachen Koaxialsonde 24 arbeiten.

Die zu den Figuren 5 bis 8 beschriebenen Erweiterungen, Verfahren und Vorteile lassen sich auch mit anderen Formen der Sonde 24 verwirklichen. Während in den bisher beschriebenen Ausführungsformen eine Triaxialleitung verwendet wird, zeigt Figur 9a eine Ausführungsform mit einer U-förmig gebogenen Koaxialleitung. Dabei geht also der Innenleiter 28 U-förmig in den Rückleiter 46 über, während beide von dem ebenfalls U-förmig gebogenen Außenleiter 26 umgeben sind. Figur 9b zeigt die Sonde 24 noch einmal im Querschnitt. Dabei sind die mehrfach angesprochenen Öffnungen 50 für den Austausch mit dem Medium 14 erkennbar.

Die Realisierung der Sonde 24 als U-förmige Koaxialleitung hat den Vorteil, dass Hin- und Rückleitung in gleichen Dimensionen aufgebaut und damit in einer besonderen Ausführungsform sogar einstückig herstellbar sind. Die offensichtliche Symmetrie lässt die reflexionsarme Ausgestaltung des unteren Endes der Sonde 24 deutlich erkennen, auch wenn dies hochfrequenztechnisch bei einer Triaxialleitung nahezu genauso gut erreichbar ist.

Anhand einer Ausschnittsvergrößerung des unteren Bereichs der Sonde 24 gemäß Figur 9c wird noch ein weiterer positiver Effekt erläutert. Die sich ausbreitende Welle, deren Richtung durch Pfeile 54 angedeutet ist, wird in ihrer Laufzeit verzögert, während sie sich durch das Medium 14 bewegt. Die U-förmige Gestalt der Sonde 24 sorgt für einen Teil der Laufstrecke, welcher zumindest im Wesentlichen horizontal orientiert ist und sich auch noch bei niedrigen Füllständen innerhalb des Mediums 14 erstreckt. Diese horizontale Laufstrecke ist unabhängig vom Füllstand und separiert daher den ersten von dem zweiten Reflexpuls, so dass deren Auswertung erheblich vereinfacht wird.

Die dargestellte Ausführung des Endes der Sonde 24 führt somit auch zu einer eleganten Teilkompensation des in Figur 8c dargestellten Messfehlers bei niedrigem Füllstand. Je weiter der Füllstand absinkt, umso mehr überlagern sich erster und zweiter Reflexpuls. Infolge dessen steigt der Messfehler, bezogen auf den wahren Füllstand, immer weiter an. Das Echo wird zunehmend mit einer entsprechend wachsenden Laufzeit ∆t zu nah gemessen, wie in der Figur 8c gezeigt. Indem aber gleichzeitig die kreis- oder parabelähnliche Ausgestaltung des Endes der Sonde 24 für das Messsignal zu einer Wegverlängerung bis zur Grenzfläche 18 führt, ist bei guter Auslegung der Gesamtgeometrie zumindest eine teilweise Kompensation der beiden Messfehler durch die Überlagerung der beiden beschriebenen Effekte gegeben. Das vereinfacht die Auswertung erheblich.

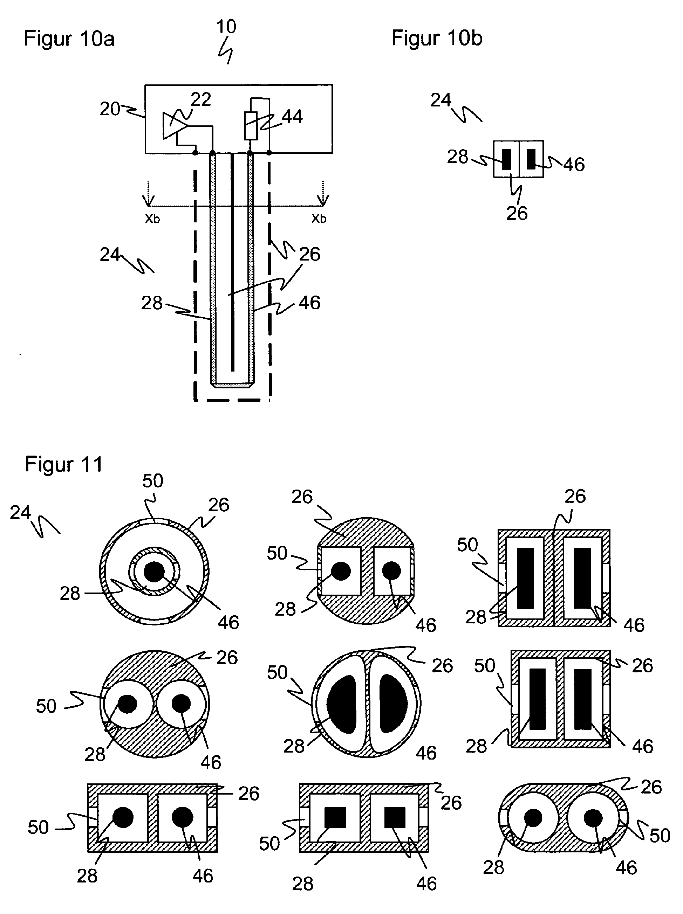

Ein ähnlicher Effekt ist natürlich auch mit anderen Geometrien des Verbindungsbereichs am unteren Ende der Sonde 24 möglich als der dargestellten U-Form. Figur 10a zeigt eine weitere Ausführungsform der Erfindung mit einer eckigen Ausgestaltung, während Figur 10b die zugehörigen eckigen Leiter im Querschnitt darstellt. Diese Form der Sonde 24 hat auch fertigungstechnische Vorteile. Die Ecken können hochfrequenztechnisch kompensiert sein, um nicht ihrerseits Störstellenreflexe zu erzeugen. Im unteren Verbindungsbereich der Sonde 24 gemäß Figur 10 ergibt sich bereits aufgrund der physikalischen Länge der horizontalen Abschnitte eine verbesserte Separierung der Pulsreflexe. Man kann diesen Effekt noch verstärken, indem man zusätzlich zumindest in Teilbereichen dieses Verbindungsbereichs einen oder mehrere Abstandshalter mit einer relativ hohen Dielektrizitätskonstanten einbringt, um den zweiten Pulsreflex weiter zu verzögern und damit zu separieren. Die zusätzliche Laufzeitdifferenz kann durch Kalibrierung oder Einlernen bei den Messungen berücksichtigt werden.

Ebenso wie die Form der Sonde 24 variiert werden kann und neben den beiden in Figuren 9 und 10 dargestellten runden und eckigen U-Formen zumindest prinzipiell auch andere Geometrien annehmen kann, etwa eine V-Form oder dergleichen, so ist auch eine Vielfalt von Querschnitten der Sonde 24 denkbar, von denen Figur 11 eine Auswahl zeigt. Oben links ist eine Variante der Triaxialleitung gezeigt, die übrigen Querschnitte zeigen unterschiedliche Ausführungsformen von jeweils zwei verbundenen Koaxialsystemen mit Hin- und Rückleitung. Die dargestellten Öffnungen, Bohrungen oder Schlitze 50 sind wie immer nur beispielhaft und auch in anderer Position, Größe, Form und Anzahl denkbar.

Jede der gezeigten Varianten bringt bestimmte Vorzüge mit sich. Rundmaterial für Innenleiter 28 und Rückleiter 46 beispielsweise ist besonders vorteilhaft, weil es hier zu keiner Feldkonzentration kommt. Eckige Leiter sind leichter herstellbar. Mit komplizierteren Leiterformen kann man die Feldlinienkonzentration steuern, damit das Medium 14 und nicht sonstige Einflüsse die Störstellen bestimmen und daher besonders genaue Messungen möglich werden. Die oben gezeigten rechteckigen und quadratischen Hohlprofile für die Außenleiter sind bevorzugt aus einem Stück gefertigt, können aber auch aus zwei standardisierten, kostengünstigen Profilstangen zusammengesetzt werden. Alle gezeigten Profile können auch aus mehreren Teilprofilen zusammengesetzt sein.

Zur Vermeidung von Anbackungen oder Ablagerungen sollten an jeder Stelle der Sonde 24 scharfe Kanten und Grate vermieden werden. Das Trommeln der Einzelteile ist eine Möglichkeit, diese Forderung zu erfüllen.

Die hier dargestellte Formenvielfalt ist auf weiter oben oder weiter unten beschriebene Ausführungsformen analog übertragbar.

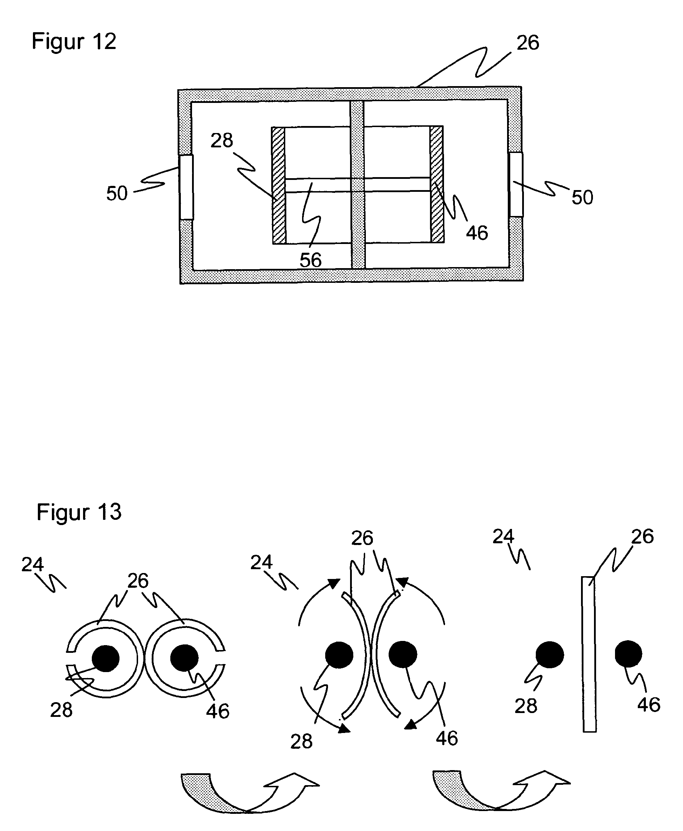

Figur 12 zeigt ein Abstandselement für die Sonde 24. Damit können die Leiter voneinander elektrisch isoliert und im richtigen Abstand gehalten werden. Als Gegenstück für ein Abstandselement im Bereich des unteren Endes der Sonde 24 kann für hinreichend starre und nicht allzu lange Sonden 24 der Prozessanschluss im Sensorkopf 24 genügen. Optional werden im Verlauf der Sonde weitere Abstandshalteelemente eingesetzt, welche dann vorteilhaft einkalibriert werden, um die künstlich eingeführten Laufzeitunterschiede durch die endlichen Dielektrizitätskonstanten zu kompensieren.

Das Beispiel gemäß Figur 12 ist ein Abstandshalter für eine Anordnung mit rechteckigem Innenleiter 28 und Rückleiter 46. Das eigentliche Abstandshalteelement 56 weist ein isolierendes Material wie Teflon auf. Entsprechend abgewandelte Formen für die verschiedenen Querschnittsvarianten, wie beispielhaft in Figur 11 gezeigt, sind denkbar.

Die bisher beschriebenen Ausführungsformen mit geschlossener Bauweise haben den Nachteil, dass die Innenräume schlecht zu reinigen sind. Offene Bauformen sind unter diesem Aspekt bevorzugt. Allerdings ist mit offenen Bauformen nicht einfach eine offene Einzelsonde gemeint, da diese große messtechnische Probleme hat. Erfindungsgemäß lassen sich die Vorteile einer geschlossenen Sonde hinsichtlich genauer und unabhängiger Messverfahren und die Vorteile einer offenen Sonde hinsichtlich Zugänglichkeit und Reinigung vereinen.

Figur 13 illustriert in schematischen Querschnittsdarstellungen den Übergang einer geschlossenen, auf koaxialen Leitungen beruhenden Sonde 24 zu einer offenen Anordnung von Innenleiter 28, Rückleiter 46 und gemeinsamem Bezugsleiter 26, wobei letzterer für die Welle das Äquivalent des Außenleiters 26 darstellt. Dazu wird, wie in den drei Bildern der Figur 13 gezeigt, der Außenleiter 26 einer koaxial ausgeführten Sonde 24 quasi aufgeschnitten und aufgebogen und geht in einen im Querschnitt rechteckigen Bezugsleiter 26 über. Dieser Bezugsleiter 26 sorgt außer für die Wellenführung auch für eine Entkopplung beziehungsweise Schirmung zwischen Innenleiter 28 und Rückleiter 46.

Es ergibt sich demnach, wie rechts in der Figur 13 gezeigt, ein hier beispielhaft plattenförmiger Bezugsleiter 26 für die nun offen liegenden Innenleiter 28 und Rückleiter 46. Der Bezugsleiter 26 sollte vorteilhaft so geformt sein, dass er sowohl dem Innenleiter 28 wie dem Rückleiter 46 eine in der Querschnittsbetrachtung flache oder konvexe Außenkontur zuwendet, damit die Welle zur Ausbildung eines tatsächlichen Bezugs zwischen Innenleiter 28 und Rückleiter 46 geführt wird. Jedenfalls sollte der Bezugsleiter so geformt sein, dass seine Außenkontur sowohl für den Innenleiter 28 wie auch für den Rückleiter 46 einen effektiven und zumindest einigermaßen gleichwertigen Bezug bildet. Ebenso sollte er vorzugsweise eine hinreichende räumliche Ausdehnung senkrecht zur Verbindungslinie zwischen den Achsen von Innenleiter 28 und Rückleiter 46 aufweisen, also in der Figur 13 eine ausreichende Höhe, um eine Kopplung zwischen Innenleiter 28 und Rückleiter 46 zumindest weitestgehend bis zu einer vernachlässigbaren Kopplungsstärke zu unterdrücken. Obwohl die Anordnung offen in dem Sinne ist, dass Innenleiter 28 und Rückleiter 46 aus einer Radialrichtung von außen zugänglich sind, sorgt der Bezugsleiter wie bei einer geschlossenen Sonde 24 in weiten Grenzen für Unabhängigkeit von Material und Geometrie des Behälters 12 sowie des Einbauortes des Sensors 10.

Der Bezugsleiter 26 kann wie in Figur 13 ein gemeinsamer Bezugsleiter für Innenleiter 28 und Rückleiter 46 sein. In den oben beschriebenen Ausführungsformen war alternativ je ein Bezugsleiter für Innenleiter 28 und Rückleiter 46 vorgesehen, nämlich die jeweiligen Außenleiter 26. Entsprechend ist auch bei einer Anordnung gemäß Figur 13 möglich, weitere Bezugsleiter vorzusehen, etwa zusätzliche Bezugsleiter außen oder mehrere mittige Bezugsleiter, oder von der mittigen Anordnung abzuweichen. Dabei sollte aber beachtet werden, dass die Bezugsleiter den Innenleiter 28 und den Rückleiter 46 hinreichend voneinander abschirmen.

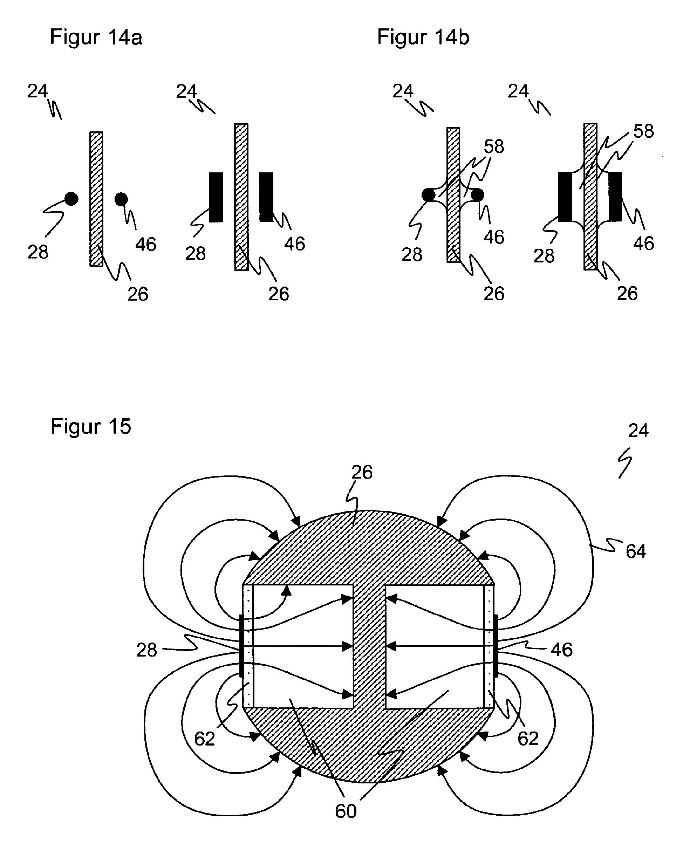

Figur 14 zeigt einige Varianten einer Sonde 24, wie sie durch den schematischen Vorgang gemäß Figur 13 entstehen. Die Variante links in Figur 14a entspricht derjenigen rechts in Figur 13. Links in Figur 14a werden ein eckiger statt eines runden Innenleiters 28 beziehungsweise Rückleiters 46 eingesetzt. Die Erfindung ist nicht auf diese Querschnittsgeometrien beschränkt, Figur 11 gibt eine Vorstellung der möglichen weiteren Formen, wenn man den Außenleiter 26 jeweils in analoger Weise zu einem Bezugsleiter 26 öffnet.

Die offene Bauweise ermöglicht eine einfache und effektive Reinigung der Sonde 24. Zur Vermeidung von Kurzschlüssen zwischen den Leitern müssen jedoch in regelmäßigen Abständen Abstandhalter, sogenannte Spacer, vorgesehen werden, um die Beabstandung sicherzustellen. Im Bereich der Lebensmittelapplikationen sind derartige Spacer problematisch, weil sich die Spalten und Ecken nicht im erforderlichen Maße reinigen lassen. Zusätzlich könnten die Kleinteile verloren gehen und das Medium 14 verunreinigen. Deshalb werden in alternativen Ausführungsformen der Sonde 24, von denen in Figur 14b zwei Varianten im Querschnitt gezeigt sind, Innenleiter 28 und Rückleiter 46 über einen längs der Sonde 24 geführten Trägerkunststoff 58 durchgängig mit dem Bezugsleiter 26 verbunden. Ein abgerundetes Profil dieser Trägerkunststoffe 58 vereinfacht die Reinigung der Sonde 24.

Der Trägerkunststoff 58 führt in einem gewissen Maße zu einer Verdichtung des elektrischen Feldes und beeinflusst so den messbaren Wellenwiderstand der Sonde 24. Um trotzdem einen durch das Medium 14 an der Grenzfläche 18 verursachten Impedanzsprung messen zu können, sollte der Luftfeldanteil maximiert werden. Das ist gleichbedeutend mit einer Minimierung der wirksamen relativen Dielektrizitätskonstanten $\varepsilon_r$ bei leerer Sonde 24 und lässt sich durch Kunststoffe mit möglichst geringer relativer Dielektrizitätskonstante $\varepsilon_r$ erreichen. Wie schon mehrfach an anderen Stellen gesagt, eignen sich beispielsweise Teflon und ähnliche fluorbasierte Kunststoffe mit $\varepsilon_r = 2,1$ gut, und sie können gleichzeitig auch effektiv und einfach gereinigt werden.

Figur 15 zeigt den Querschnitt einer weiteren Ausführungsform einer erfindungsgemäßen Sonde 24 in einer Art Verbundbauweise, welche die zu den Figuren 13 und 14 beschriebenen Ideen weiterentwickelt. Der Bezugsleiter 26 ist hier wiederum ein gemeinsamer Bezugsleiter, obwohl erneut denkbar ist, stattdessen mehrere Bezugsleiter vorzusehen. Der Bezugsleiter 26 weist einen Metallkern auf, in dem längsgeführte Aussparungsnuten 60 vorgesehen sind. Diese Aussparungsnuten 60 werden durch nicht metallische Träger 62 geschlossen, so dass sich insgesamt eine konvexe, bevorzugt annähernd kreisförmige Außenkontur der Sonde 24 ergibt. Innenleiter 28 und Rückleiter 46 sind als leitende Streifen auf den Trägern 62 ausgeführt. In einer Ausführungsform sind die Träger 62 Leiterplatten und Innenleiter 28 beziehungsweise Rückleiter 46 sind als Leiterbahnen beziehungsweise Microstrip aufgedruckt.

Die Innenseite der bevorzugt dünnen Träger oder Leiterkarten 62 ist nicht metallisiert und liegt über dem luftgefüllten Innenraum der Aussparungsnuten 60. Dadurch ist die wirksame relative Dielektrizitätskonstante $\varepsilon_r$ in diesem Bereich sehr niedrig. Viele der Feldlinien 64 finden daher ihren Weg zu dem Bezugsleiter 26 von dessen Außenseite her durch den freien Raum. Sobald ein Medium 14 die Außenseite der Sonde 24 umspült, nehmen die Feldlinien 64 bevorzugt den Weg durch das Medium 14. Das führt zu einer messbaren Änderung im Wellenwiderstand und damit zu den ersten und zweiten Reflexpulsen an der Grenzfläche 18.

Besonders vorteilhaft ist die sich ergebende runde Querschnittsform der Sonde 24. Zum zusätzlichen Schutz kann diese mit einem Schrumpfschlauch aus Teflon oder einem ähnlichen Material überzogen werden. Damit werden fertigungstechnisch verbleibende Verunreinigungen und Unebenheiten ausgeschaltet, es ergibt sich eine einheitliche und leicht zu reinigende Oberfläche, womit die Sonde 24 ideal im Lebensmittelbereich einsetzbar ist.

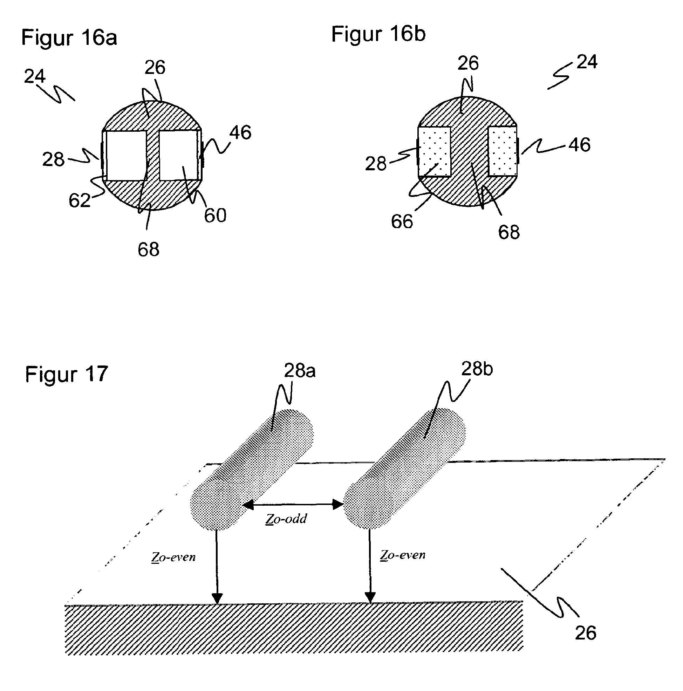

In Figur 16a wird die Ausführungsform gemäß Figur 15 noch einmal vereinfacht dargestellt und einer weiteren Ausführungsform gemäß Figur 16b gegenübergestellt. Die luftgefüllten Aussparungsnuten 60 gemäß Figur 16a könnten bei größeren Außendrücken, also Druckunterschieden zwischen der Messumgebung und den durch die Aussparungsnuten 60 entstehenden Luftkammern in der Sonde 24, zu Wölbungen oder gar Brüchen der Träger 60 führen und damit den Einsatz des Sensors 10 in einigen Anwendungen verhindern.

In der Ausführungsform gemäß Figur 16b sind deshalb die Aussparungsnuten 60 ausgefüllt, beispielsweise mit einem Kunststoff niedriger relativer Dielektrizitätskonstante. Innenleiter 28 und Rückleiter 46 können zur einfachen Fertigung direkt auf den Kunststoff aufgebracht werden, beispielsweise als Flexprint auf Teflon. Diese Anordnung ist etwas weniger sensitiv, weil der Kunststoff den Wellenwiderstand näher an denjenigen Wellenwiderstand bei umgebendem Medium 14 heranführt und daher der Sprung an der Grenzfläche 18 etwas geringer ausfällt. In den meisten Anwendungen, besonders wenn die relative Dielektrizitätskonstante des Mediums 14 nicht allzu gering ist, bedeutet dies für die Praxis aber keine Einschränkung. Die Stärke der Zwischenwand 68 des Bezugsleiters zwischen den Aussparungsnuten 60 des Bezugsleiters 26 kann variiert werden.

Figur 17 erläutert ein Prinzip, nach dem elektromagnetische Strahlung in EMVkritischen Anwendungen der Sonde 24 mit offenliegenden Signalleitungen unterdrückt werden kann. Dazu werden differentiell angesteuerte symmetrische Leitungen eingesetzt. Diese Übertragungsart ist sehr robust gegenüber Gleichtaktstörungen, welche meist durch Feldeinstrahlung von externen Störern verursacht werden.

Koppelt ein externer Störer ein Signal gleichartig in die beiden Leiter 28a, 28b des beispielhaft gezeigten differentiell ausgeführten Innenleiters 28 ein, so ergibt sich ein Gleichtaktsignal. Zwischen den beiden Leitern 28a, 28b tritt keine Signaldifferenz auf.

Ein Gegentaktsignal wird folglich nicht gestört. Die Messung eines Füllstandes mit differentiellen Messsignalen bleibt also unbeeinflusst und ist somit eine bevorzugte Lösungsmöglichkeit.

Die Nutzung einer definierten Bezugsfläche beziehungsweise eines Bezugsleiters 26 bietet auch hierbei einige Vorteile. Zum einen kann sie als Schirm zwischen dem jeweils als Doppelleitung ausgeführten Innenleiter 28 und Rückleiter 46 verwendet werden, um unerwünschte Kopplungen zwischen den Leitungspaaren zu unterdrücken. Weiterhin werden die Gleichtakt- und Gegentaktimpedanzen der Leitungen erheblich weniger durch externe Strukturen beeinflusst, die Funktion der Sonde 24 damit also wesentlich unabhängiger von der Geometrie oder dem Material des Behälters 12 oder dem Einbauort des Sensors 10. Dabei hat sich auch gezeigt, dass bei der Optimierung derartiger Anordnungen die Gleichtakt- und Gegentaktimpedanzen recht unabhängig voneinander dimensionierbar sind.

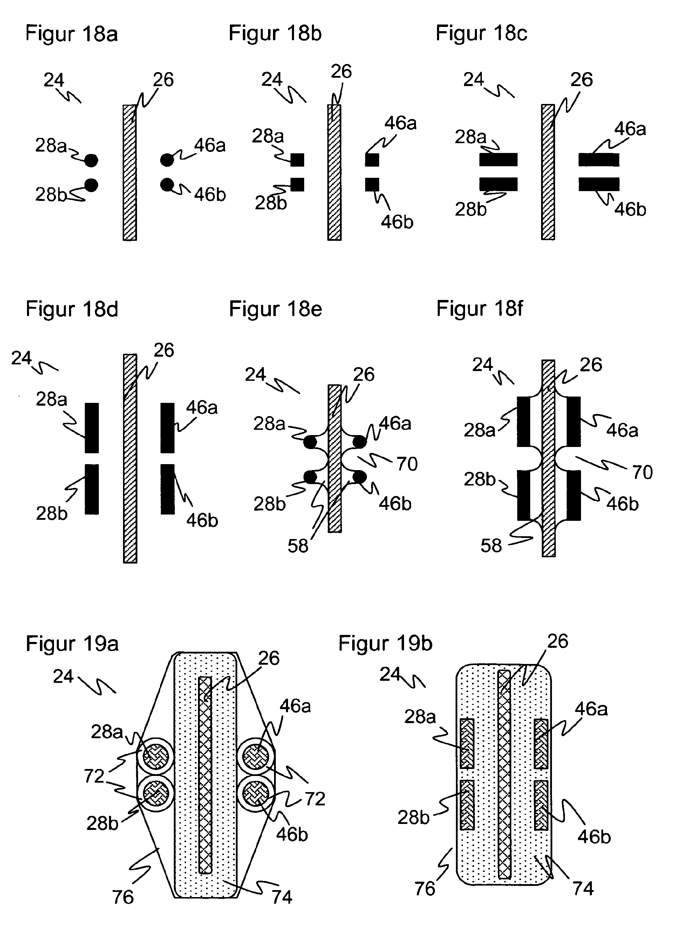

Figur 18 zeigt Querschnittsdarstellungen verschiedener Ausführungsformen einer differentiell ausgeführten Sonde. Denkbar sind runde, quadratische oder auch länglich ausgebildete Signalleitungen. Zahlreiche weitere Varianten der entstehenden Lecher-Leitung über einer Bezugsfläche sind ähnlich wie in Figur 11 für koaxiale Ausführungsformen gezeigt möglich. Nicht erkennbar sind wegen der Querschnittsdarstellung die unteren Verbindungsbereiche zwischen jeweiligem Einzel-Innenleiter 28a, 28b und zugehörigem Einzel-Rückleiter 46a, 46b. Diese Verbindungsbereiche können ähnlich ausgestaltet sein wie oben zu den Figuren 9 und 10 beschrieben, so dass also beispielsweise eine doppelte runde oder eckige U-Form entsteht.

Der als Bezugsfläche ausgebildete Bezugsleiter 26 trägt erheblich zur Funktionalität der Sonde 24 bei und wirkt als Schirm, welcher den hinlaufenden von dem rücklaufenden Signalpfad entkoppelt. Vollständig offene Bauformen wie in den Figuren 18a-18d sind geeignet für Medien 14 mit besonders niedriger relativer Dielektrizitätskonstante $\varepsilon_r$. Anforderungen an die mechanische Stabilität des Aufbaus können es aber erforderlich machen, die Einzelleiter 28, 46 gegenüber der Bezugsfläche 26 definiert zu positionieren. Ähnlich wie in der Ausführungsform gemäß Figur 14b können dafür durchgängige Kunststoffträger mit möglichst niedriger Dielektrizitätskonstante $\varepsilon_r$ eingesetzt werden, beispielsweise Teflon. Es ist vorteilhaft, jeweils eine Nut 70 zwischen den Kunststoffträgern der Einzelleiter vorzusehen, um möglichst wenig Material zu verwenden und damit das Feld gegenüber Vakuum so wenig wie möglich zu beeinträchtigen. Denkbar ist aber auch, auf diese Nuten 70 zu verzichten oder sie anders auszubilden.

Figur 19 zeigt eine weitere Ausführungsform der Erfindung, bei welcher die Sonde 24 flexibel ausgestaltet ist. Die ist besonders bei großen Behältern 12 und längeren Sonden 24 vorteilhaft, etwa bis in den Bereich von 10 Metern Länge und mehr. Dann sind starre Sonden 24 unhandlich und Seilsonden bevorzugt.

Die Ausführungsform gemäß Figur 19a zeigt jeweils zwei als runde Adern ausgebildete Innenleiter 28a, 28b und Rückleiter 46a, 46b, welche von einem isolierenden Mantel 72 umgeben sind. Der mittig angeordnete Bezugsleiter 26 hat einen langgestreckten Querschnitt und ist von einem isolierenden Material 74 umgeben, um Innenleiter 28 und Rückleiter 46 zu beabstanden. Am unteren Ende der Sonde 24 wird jeweils eine Ader des Innenleiters 28a, 28b mit der zugehörigen Ader des Rückleiters 46a, 46b elektrisch verbunden. Die Sonde 24 insgesamt ist mit einem passenden Schrumpfschlauch 76 umhüllt.

In der Ausführungsform gemäß Figur 19b ist das isolierende Material 74 weiter ausgedehnt und fungiert gleichzeitig als Mantel 72. Es entsteht eine komplett umspritzte Mehrdrahtleitung, welche optional mit einem zusätzlichen Schrumpfschlauch 76 umgeben werden kann.

Alle Leiter 26, 28, 46 sind flexibel und bevorzugt litzenartig aufgebaut, bestehen also aus einer Vielzahl von Einzeldrähten. Der Bezugsleiter 26 kann ein Stahldrahtgeflecht aufweisen, unter anderem um der Belastung durch ein Gewicht am Ende der Sonde 24 standzuhalten oder ein Abspannen gegen den Boden des Behälters 12 zu ermöglichen.

Es entsteht bei dieser Ausführungsform ein homogenes mehradriges Kabel, welches flexibel ist und sich deshalb besonders für große Messbereiche eignet. Alternativ zu der Darstellung kann auch jeweils nur ein Innenleiter 28 und ein Rückleiter 46 vorgesehen sein und somit auf die differentielle Leitungsführung verzichtet werden.

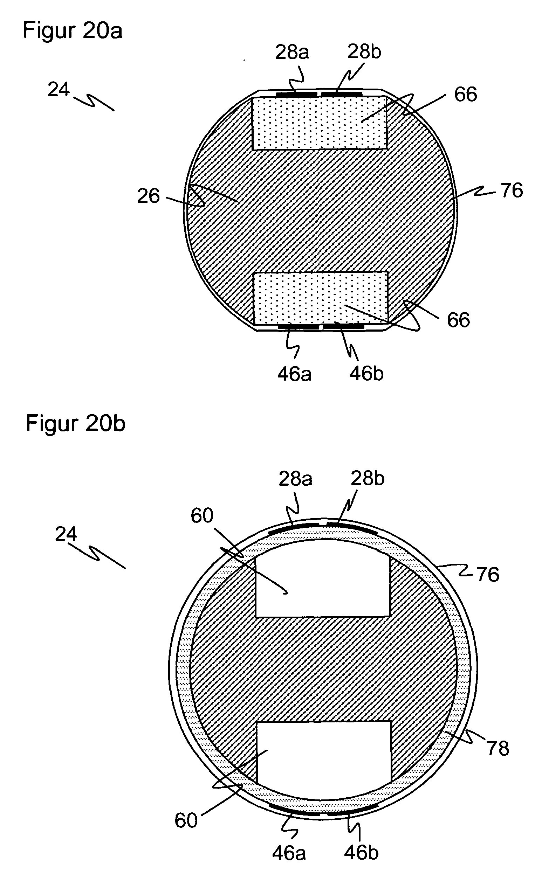

Figur 20 zeigt weitere Ausführungsformen einer nicht flexiblen Sonde 24 für hohe mechanische Beanspruchung. Entgegen der Darstellung ist alternativ auch eine einfache statt einer differentiellen Signalführung denkbar. Der Bezugsleiter 26 ist hier als massives Stangenmaterial ausgeführt, dessen Aussparungsnuten 66 bei der Ausführungsform gemäß Figur 20a zur weiteren Erhöhung der Stabilität materialgefüllt sind. Bei der Ausführungsform gemäß Figur 20b ist eine umgebende druckfeste Kunststoffröhre 78 vorgesehen, so dass die Aussparungsnut 60 luftgefüllt sein kann.

Die Beschreibung folgt in ihrem Verlauf einer Entwicklung ausgehend von einer herkömmlichen Koaxialsonde 24. Die zu den einzelnen Figuren beschriebenen Ausführungsformen sind dabei nicht als in sich abgeschlossen zu verstehen, denn zahlreiche Merkmale einer Ausführungsform lassen sich auch in anderen Ausführungsformen einsetzen. Derartige Kombinationen sind an manchen Stellen explizit genannt, wodurch aber die Kombinationsmöglichkeiten nicht beschränkt werden sollen. Mögliche Kombinationen betreffen nicht abschließend die Materialen, das Vorsehen, die Wahl und die Anordnung eines Abschlusswiderstands 44, die Öffnungen zum Flüssigkeitsaustausch, die Querschnitte der verschiedenen Leiter, die Anschaltungen und die verbesserten Auswertungsverfahren aufgrund von Pulsen bei den Positionen B, D und E analog der Figur 5.

**Patentansprüche**

1. Sensor (10) nach dem TDR-Prinzip, insbesondere TDR-Füllstandssensor für die Anwendung im Lebensmittelbereich, mit einer Sonde (24), die einen Innenleiter (28) und einen Bezugsleiter (26) zur Führung eines elektromagnetischen Signals aufweist, mit einem Sender (38) und einem Empfänger (40) zum Aussenden und Empfangen des Signals an einem ersten Sondenende sowie mit einer Steuerung (22, 36), welche dafür ausgebildet ist, die Entfernung einer Grenzfläche (18) anhand der Laufzeit in der Sonde (24) geführter und an der Grenzfläche (18) reflektierter Signale zu bestimmen, wobei ein Rückleiter (46) vorgesehen ist, welcher mit dem Innenleiter (28) verbunden ist und auf dem ein Signal von einem dem ersten Sondenende gegenüberliegenden zweiten Sondenende in Gegenrichtung zu dem ersten Sondenende zurücklaufen kann,
   **dadurch gekennzeichnet,**
   **dass** der Bezugsleiter (26) als gemeinsamer Bezugsleiter (26) auch für den Rückleiter (46) ausgebildet ist, um das zurücklaufende Signal zwischen Rückleiter (46) und Bezugsleiter (26, 28) zu führen, und dass der gemeinsame Bezugsleiter mittig zwischen Innenleiter (28) und Rückleiter (46) angeordnet ist.

2. Sensor (10) nach Anspruch 1,
   wobei der gemeinsame Bezugsleiter (26) als mittig zwischen Innenleiter (28) und Rückleiter (46) angeordnete Bezugsplatte ausgebildet ist, und wobei insbesondere Innenleiter (28) und Rückleiter (46) von dem Bezugsleiter (26) beabstandet und/oder durch elektrisch isolierende Träger (58) mit dem Bezugsleiter (26) verbunden sind.

3. Sensor (10) nach Anspruch 1 oder 2,
   wobei der Bezugsleiter (26) als Metallkern mit in Längsrichtung verlaufenden luft- oder materialgefüllten Aussparungsnuten (60) ausgebildet ist, und wobei Innenleiter (28) und Rückleiter (46) über den Aussparungsnuten (60) angeordnet, insbesondere Innenleiter (28) und Rückleiter (46) als Metallstreifen, Kupferstreifen oder Leiterbahnen auf Trägern (62) oder Leiterplatten ausgebildet sind, welche die Aussparungsnuten (60) abschließen.

4. Sensor (10) nach einem der vorhergehenden Ansprüche,
wobei Bezugsleiter (26), Innenleiter (28) und Rückleiter (46) als flexible Leiter einer Seilsonde ausgebildet sind, insbesondere indem der Bezugsleiter (26) als Stahlgeflecht und Innenleiter (28) und Rückleiter (46) als Metalllitzen ausgeführt sind, wobei ein Isolationsmaterial (72, 74) die Leiter voneinander elektrisch isoliert und/oder nach außen schützt, um insgesamt ein mehradriges Kabel zu bilden.

5. Sensor (10) nach einem der vorhergehenden Ansprüche,
wobei Innenleiter (28) und Rückleiter (46) differentiell ausgebildet sind, indem jeweils mindestens zwei Innenleiter (28a, 28b) und zwei Rückleiter (46a, 46b) vorgesehen sind.

6. Sensor (10) nach einem der vorhergehenden Ansprüche,
wobei die Verbindung zwischen Innenleiter (28) und Rückleiter (46) eine runde U-Form oder eine eckige U-Form mit einer Laufstrecke parallel zu der Grenzfläche (18) aufweist, wobei die Verbindung hochfrequenzkompensiert ist, um Artefaktreflexe an den Winkelstellen zu unterdrücken oder zu vermeiden, wobei insbesondere die Verbindung ein separates Leitungsstück als Teil eines Abstandselements bildet.

7. Sensor (10) nach einem der vorhergehenden Ansprüche,
wobei ein Abschlusswiderstand (44) an dem Rückleiter (46) vorgesehen oder an den Rückleiter (46) angeschlossen innerhalb eines Messkopfes (20) am ersten Sondenende angeordnet ist.

8. Sensor (10) nach einem der vorhergehenden Ansprüche,
wobei die Sonde (10) hygienisch ausgebildet ist, insbesondere beschichtet oder mit einem Schrumpfschlauch (76) überzogen ist und/oder gerundete Kanten aufweist, wobei das Material der Sonde (24), der Beschichtung und/oder des Schrumpfschlauchs (76) schmutzabweisend und/oder antibakteriell ist.

9. Verfahren zur Messung des Abstands einer Grenzfläche (18) nach dem TDR-Prinzip, insbesondere zur Messung eines Füllstands im Lebensmittelbereich, bei dem mindestens ein elektromagnetisches Signal von einem Messkopf (20) ausgesandt und empfangen und aus der Laufzeit der Abstand ermittelt wird, wobei das Signal zwischen einem Innenleiter (28) und einem Bezugsleiter (26) einer Sonde (24) in einer Senderichtung zu der Grenzfläche (18) hin und auf einem Rückleiter (46) in einer Gegenrichtung zu der Senderichtung geführt wird, **dadurch gekennzeichnet,**
**dass** das Signal in der Gegenrichtung zwischen dem Rückleiter (46) und dem Bezugsleiter (26) geführt wird, der als gemeinsamer Bezugsleiter (26) mittig zwischen Innenleiter (28) und Rückleiter (46) angeordnet ist.

10. Verfahren nach Anspruch 9,
bei dem einzelne oder Kombinationen der folgenden Signale für die Messung berücksichtigt werden: das ausgesandte Signal, ein erstes Reflexsignal, das beim Auftreffen in Senderichtung auf die Grenzfläche (18) entsteht, ein zweites Reflexsignal, das beim Auftreffen in Gegenrichtung auf die Grenzfläche (18) entsteht und ein durchlaufendes Signal, welches von dem Innenleiter (28) auf den Rückleiter (46) und zurück zu dem Messkopf (20) geführt und dort insbesondere in einem Abschlusswiderstand (44) absorbiert wird.

11. Verfahren nach Anspruch 10,
wobei das erste und zweite Reflexsignal ausgewertet werden, insbesondere deren Abstand zueinander, und wobei dieser Abstand durch eine horizontale Laufstrecke zwischen Innenleiter (28) und Rückleiter (46) vergrößert ist und/oder wobei die Laufzeit des durchlaufenden Signals anhand einer Verzögerung durch die Laufstrecke zwischen Durchtritt durch die Grenzfläche (18) auf dem Innenleiter (28) in Senderichtung und Durchtritt durch die Grenzfläche (18) auf dem Rückleiter (46) in Gegenrichtung ausgewertet wird.

12. Verfahren nach einem der Ansprüche 9 bis 11,
wobei die relative Dielektrizitätskonstante des die Grenzfläche (18) bildenden Mediums (14) und insbesondere daraus auch die Art des Mediums (14) selbst anhand einer Laufzeitverzögerung zwischen erstem und zweitem Reflexsignal oder des durchlaufenden Signals bestimmt wird.

**Claims**

1. A sensor (10) according to the TDR principle, in particular a TDR level sensor for use in the food sector, having a probe (24) which has an inner conductor (28) and a reference conductor (26) for conducting an electromagnetic signal, having a transmitter (38) and a receiver (40) for transmitting and receiving the signal at a first probe end as well as having a control (22, 36) which is configured to determine the distance of a boundary surface (18) with reference to the transit time of signals conducted in the probe (34) and reflected at the boundary surface (18), wherein a return conductor (46) is provided which is connected to the inner conductor (28) and along which a signal can run back from a second probe end disposed opposite the first probe end in the opposite direction to the first probe end, **characterised in that** the reference conductor (26) is also configured as a common reference conductor (26) for the return conductor (46) to conduct the returning signal between the return conductor (46) and the reference conductor (26, 28); and **in that** the common reference conductor is arranged centrally between the inner conductor (28) and the return conductor (46).

2. A sensor (10) in accordance with claim 1, wherein the common reference conductor (26) is configured as a reference board arranged centrally between the inner conductor (28) and the return conductor (46), and wherein in particular the inner conductor (28) and the return conductor (46) are spaced apart from the reference conductor (26) and/or are connected to the reference conductor (26) by electrically insulating carriers (58).

3. A sensor (10) in accordance with claim 1 or claim 2, wherein the reference conductor (26) is configured as a metal core having cut-out grooves (60) extending in the longitudinal direction and filled with air or material and wherein the inner conductor (28) and the return conductor (46) are arranged above the cut-out grooves (60), wherein in particular the inner conductor (28) and the return conductor (46) are configured as metal strips, copper strips or conductor tracks on carriers (62) or as conductor boards which terminate the cut-out grooves (60).

4. A sensor (10) in accordance with any one of the preceding claims, wherein the reference conductor (26), the inner conductor (28) and the return conductor (46) are configured as flexible conductors of a cable probe, in particular in that the reference conductor (26) is designed as a steel braiding and the inner conductor (28) and the return conductor (46) are designed as metal strands, with an insulation material (72, 74) electrically insulating the conductors from one another and/or protecting them from the outside to form a multi-core cable overall.

5. A sensor (10) in accordance with any one of the preceding claims, wherein the inner conductor (28) and the return conductor (46) are configured in a differentiated manner in that at least two inner conductors (28a, 28b) and two return conductors (46a, 46b) are respectively provided.

6. A sensor (10) in accordance with any one of the preceding claims, wherein the connection between the inner conductor (28) and the return conductor (46) has a round U shape or an angular U shape having a propagation distance parallel to the boundary surface (18), with the connection being radio frequency compensated to suppress or avoid artefact reflections at the angular points, with the connection in particular forming a separate conducting piece as part of a spacer element.

7. A sensor (10) in accordance with any one of the preceding claims, wherein a terminal resistor (44) is provided at the return conductor (46) or is arranged, connected to the return conductor (46), within a measuring head (20) at the first probe end.

8. A sensor (10) in accordance with any one of the preceding claims, wherein the probe (10) is sanitised, in particular coated or covered by a shrinking hose (76) and/or has rounded edges, with the material of the probe (24), of the coating and/or of the shrinking hose (76) being dirt-repellent and/or antibacterial.

9. A method of measuring the distance of a boundary surface (18) according to the TDR principle, in particular of measuring a level in the food sector, wherein at least one electromagnetic signal is transmitted and received by a measuring head (20) and the distance is determined from the transit time, with the signal being conducted between an inner conductor (28) and a reference conductor (26) of a probe (24) towards the boundary surface (18) in a transmission direction and along a return conductor (46) in an opposite direction to the transmission direction, **characterised in that** the signal is conducted in the opposite direction between the return conductor (46) and the reference conductor (26) which is arranged as a common reference conductor (26) centrally between the inner conductor (28) and the return conductor (46).

10. A method in accordance with claim 9, wherein individual ones or combinations of the following signals are considered for the measurement: the transmitted signal, a first reflected signal which arises on the incidence on the boundary surface (18) in the transmission direction, a second reflected signal which arises on the incidence on the boundary surface (18) in the opposite direction and a throughgoing signal which is conducted from the inner conductor (28) to the return conductor (46) and back to the measuring head (20) and is there in particular absorbed in a terminal resistor (44).

11. A method in accordance with claim 10, wherein the first and second reflected signals are evaluated, in particular their distance from one another, and wherein this distance is increased by a horizontal propagation distance between the inner conductor (28) and the return conductor (46) and/or wherein the transit time of the throughgoing signal is evaluated with reference to a delay by the propagation distance between the passage through the boundary surface (18) along the inner conductor (28) in the transmission direction and the passage through the boundary surface (18) in the opposite direction along the return conductor (46).

12. A method in accordance with any one of the claims 9 to 11,
wherein the relative dielectric constant of the medium (14) forming the boundary surface (18) is determined and in particular the type of the medium (14) itself is also determined from this with reference to a transit time delay between the first and the second reflected signals or of the throughgoing signal.

## Revendications

1. Capteur (10) d'après le principe de réflectométrie temporelle (TDR), en particulier capteur de niveau de remplissage par TDR pour l'application dans le secteur des produits alimentaires, comprenant une sonde (24) qui comprend un conducteur intérieur (28) et un conducteur de référence (26) pour le guidage d'un signal électromagnétique, comprenant un émetteur (38) et un récepteur (40) pour émettre et recevoir le signal à une première extrémité de la sonde, et comprenant une commande (22, 36) qui est réalisée pour déterminer l'éloignement d'une surface limite (18) au moyen du temps de parcours de signaux guidés dans la sonde (24) et réfléchis à la surface limite (18), dans lequel il est prévu un conducteur de retour (46), qui est relié au conducteur intérieur (28) et via lequel un signal provenant d'une seconde extrémité de la sonde à l'opposé de la première extrémité peut se propager en retour en direction opposée vers la première extrémité de la sonde, **caractérisé en ce que**
le conducteur de référence (26) est réalisé à titre de conducteur de référence commun (26) également pour le conducteur de retour (46), afin de guider le signal qui se propage en retour entre le conducteur de retour (46) et le conducteur de référence (26, 28), et **en ce que** le conducteur de référence commun est agencé au milieu entre le conducteur intérieur (28) et le conducteur de retour (46).

2. Capteur (10) selon la revendication 1,
dans lequel le conducteur de référence commun (26) est réalisé comme une plaque de référence agencée au milieu entre le conducteur intérieur (28) et le conducteur de retour (46), et dans lequel en particulier le conducteur intérieur (28) et le conducteur de retour (46) sont à distance du conducteur de référence (26) et/ou sont reliés au conducteur de référence (26) par des supports électriquement isolants (58).

3. Capteur (10) selon la revendication 1 ou 2,
dans lequel le conducteur de référence (26) est réalisé comme un noyau en métal avec des rainures évidées (60) qui s'étendent en direction longitudinale et qui sont remplies d'air ou d'un matériau, et dans lequel le conducteur intérieur (28) et le conducteur de retour (46) sont agencés au-dessus des rainures évidées (60), en particulier le conducteur intérieur (28) et le conducteur de retour (46) sont réalisés comme des rubans de métal, des rubans de cuivre ou des pistes conductrices sur des supports (62) ou sur des cartes à circuits, qui referment les rainures évidées (60).

4. Capteur (10) selon l'une des revendications précédentes,
dans lequel le conducteur de référence (26), le conducteur intérieur (28) et le conducteur de retour (46) sont réalisés sous forme de conducteurs flexibles d'une sonde sous forme de câble, en particulier dans lequel le conducteur de référence (26) est réalisé sous forme de tresse en acier et le conducteur intérieur (28) et le conducteur de retour (46) sont réalisés sous forme de torons en métal, et dans lequel un matériau d'isolation (72, 74) isole électriquement les conducteurs les uns vis-à-vis des autres et/ou les protège vers l'extérieur, afin de former dans l'ensemble un câble à plusieurs conducteurs.

5. Capteur (10) selon l'une des revendications précédentes,
dans lequel le conducteur intérieur (28) et le conducteur de retour (46) sont réalisés de manière différentielle, dans lequel il est prévu respectivement au moins deux conducteurs intérieurs (28a, 28b) et deux conducteurs de retour (46a, 46b).

6. Capteur (10) selon l'une des revendications précédentes,
dans lequel la liaison entre le conducteur intérieur (28) et le conducteur de retour (46) présente une forme en U arrondie ou une forme en U polygonale avec un trajet de parcours parallèle à la surface limite (18), et dans lequel la liaison est compensée vis-à-vis des hautes fréquences, afin de supprimer ou d'éviter des réflexions artefacts au niveau des emplacements angulaires, et dans lequel en particulier la liaison forme un morceau de ligne séparé en tant que partie d'un élément d'écartement.

7. Capteur (10) selon l'une des revendications précédentes,
dans lequel il est prévu une résistance de terminaison (44) au niveau du conducteur de retour (46), ou bien une résistance de terminaison (44) est agencée branchée au conducteur de retour (46) à l'intérieur d'une tête de mesure (20) à la première extrémité de la sonde.

**8.** Capteur (10) selon l'une des revendications précédentes,
dans lequel la sonde (10) est réalisée de manière hygiénique, en particulier avec un revêtement ou un doublage au moyen d'un tuyau rétractable (76), et/ou présente des arêtes arrondies, et le matériau de la sonde (24), du revêtement et/ou du tuyau rétractable (76) présente des propriétés de répulsion vis-à-vis des saletés et/ou est antibactérien.

**9.** Procédé pour la mesure de la distance d'une surface limite (18) d'après le principe de réflectométrie temporelle (TDR), en particulier pour la mesure d'un niveau de remplissage dans le secteur des produits alimentaires, dans lequel au moins un signal électromagnétique est émis et reçu par une tête de mesure (20) et on détermine la distance à partir du temps de parcours, dans lequel le signal est guidé entre un conducteur intérieur (28) et un conducteur de référence (26) d'une sonde (24) à l'aller dans une direction d'émission vers la surface limite (18) et via un conducteur de retour (46) dans une direction opposée à la direction d'émission,
**caractérisé en ce que**
le signal est guidé dans la direction opposée entre le conducteur de retour (46) et le conducteur de référence (26) qui, à titre de conducteur de référence commun (26), est agencé au milieu entre le conducteur intérieur (28) et le conducteur de retour (46).

**10.** Procédé selon la revendication 9,
dans lequel on prend en compte des signaux individuels ou des combinaisons des signaux suivants pour la mesure : le signal émis, un premier signal de réflexion qui se produit lors de l'arrivée en direction d'émission sur la surface limite (18), un second signal de réflexion qui se produit lors de l'arrivée en direction opposée sur la surface limite (18), et un signal traversant, qui est guidé du conducteur intérieur (28) vers le conducteur de retour (26) et en retour vers la tête de mesure (20) et qui est absorbé dans celle-ci en particulier dans une résistance de terminaison (44).

**11.** Procédé selon la revendication 10,
dans lequel on évalue le premier et le second signal de réflexion, en particulier leur distance l'un par rapport à l'autre et cette distance est agrandie par un trajet de propagation horizontal entre le conducteur intérieur (28) et le conducteur de retour (46), et/ou le temps de propagation du signal traversant est évalué au moyen d'un retard dû au le trajet de propagation entre la traversée de la surface limite (18) sur le conducteur intérieur (28) en direction d'émission et la traversée de la surface limite (18) sur le conducteur de retour (46) en direction opposée.

**12.** Procédé selon l'une des revendications 9 à 11,

dans lequel la constante diélectrique relative du milieu (14) qui forme la surface limite (18) et en particulier à partir de celle-ci également le type de milieu (14) lui-même, sont déterminés au moyen d'un retard du temps de propagation entre le premier et le second signal de réflexion ou du signal traversant.

Figur 1
(Stand der Technik)

Figur 2
(Stand der Technik)

## Figur 3

## Figur 4

Figur 5

Figur 6

Figur 7

Figur 8a

Figur 8b

Figur 8c

Figur 9a

Figur 9b

Figur 9c

Figur 10a

10

20

22

44

Xb    Xb

24

26

28    46

Figur 10b

24

28    46

26

Figur 11

24

50    26

28    46

26

50

28    46

26

50

28    46

26

50

28    46

26

50

28    46

26

50

28    46

26

50

28    46

26

50

28    46

26

50

28    46

Figur 12

26

28

50

50

56

46

Figur 13

24

26

28

46

24

26

28

46

24

26

28

46

Figur 14a

Figur 14b

Figur 15

Figur 16a

Figur 16b

Figur 17

Figur 18a

24    26
28a    46a
28b    46b

Figur 18b

24    26
28a    46a
28b    46b

Figur 18c

24    26
28a    46a
28b    46b

Figur 18d

24    26
28a    46a
28b    46b

Figur 18e

24    26
28a    46a
70
28b    46b
58

Figur 18f

24    26
28a    46a
70
28b    46b
58

Figur 19a

24    26
28a    46a
72    72
28b    46b
76    74

Figur 19b

24    26
28a    46a
28b    46b
76    74

Figur 20a

Figur 20b

**EP 2 154 495 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0799407 B1
- DE 10043838 A1
- DE 10101714 A1
- DE 19958584 C1
- US 20070090992 A1
- DE 10044888 A1
- US 4135397 A

- US 20040059508 A1
- WO 0163219 A2
- WO 0223139 A1
- EP 1069649 A1
- US 5656774 A
- EP 1186869 A2
- DE 102004035757 B3